# EUROPÄISCHE PATENTANMELDUNG

(11) **EP 4 663 564 A1**
(43) Veröffentlichungstag der Anmeldung: **17.12.2025**
(21) Anmeldenummer: 25181830.8
(22) Anmeldetag: 10.06.2025
(51) Int. Cl.: B65C 1/02, B65C 9/26, B29C 63/00

(54) **APPLIKATIONSEINHEIT UND VERFAHREN ZUR VERARBEITUNG VON SELBSTKLEBENDEN STANZTEILEN ZUM VERSCHLUSS VON ÖFFNUNGEN IN EINEM FAHRZEUGELEMENT WIE BATTERIEGEHÄUSEN**

(30) Priorität: 14.06.2024 DE 102024116852
(71) Anmelder: TESA SE, 22848 Norderstedt (DE)
(72) Erfinder: Wienzek, Tristan, 22848 Norderstedt (DE); Topa Tcheukam, Ismael, 22848 Norderstedt (DE)
(74) Vertreter: tesa SE

(57) **Zusammenfassung**

Die Erfindung betrifft ein Verfahren zum automatisierten Aufbringen eines selbstklebenden Stanzteils (7) auf ein Fahrzeugelement (1) wie Batteriegehäuse durch eine an einem Roboterarm befestigte Applikationseinheit (100), wobei mittels eines Zylinders (5), aufweisend eine Wirkachse (W) und umfassend einen Vakuumstempel (6), ein selbstklebendes Stanzteil (7) von einem Stanzteilband (8) aufweisend eine Längsrichtung (L) abgelöst wird und dann auf ein Fahrzeugelement (1) aufgestempelt wird,
- wobei das Stanzteilband (8) zur Verfügung gestellt wird,
- der Vakuumstempel (6) in eine Übernahmeposition bewegt wird,
- wobei in der Übernahmeposition ein Vakuum in dem Vakuumstempel (6) aktiviert wird,
- das selbstklebende Stanzteil (7) durch Bewegen des Vakuumstempels in Richtung des selbstklebenden Stanzteils (7) mittels des Vakuums am Vakuumstempel (6) fixiert wird,
- das selbstklebende Stanzteil (7) von dem Stanzteilband (8) abgelöst wird, indem der Vakuumstempel (6) mindestens so weit wegbewegt wird, dass das selbstklebende Stanzteil (7) vollständig von dem Stanzteilband (8) abgelöst wird, und
- der Vakuumstempel (6) in eine Position über das Fahrzeugelement (1) geführt wird und das selbstklebende Stanzteil (7) auf dem Fahrzeugelement (1) aufgebracht wird, indem der Vakuumstempel (6) durch den Zylinder (5) aus der Übernahmeposition entlang der Wirkachse (W) in eine Applikationsposition gebracht wird, in der das selbstklebende Stanzteil (7) auf das Fahrzeugelement (1) gestempelt wird,
- der Vakuumstempel (6) nach dem Stempeln wegbewegt wird,
wobei eine separate Rolleneinheit (61) umfassend mindestens eine Rolle (62, 63) vorgesehen ist, die nach dem Stempeln zum Stanzteil geführt und so bewegt wird, dass die mindestens eine Rolle (62, 63) den Außenrand der Kontur des Stanzteils (7) abfährt und das Stanzteil so auf das Fahrzeugelement (1) anpresst.

## Beschreibung

Die Erfindung betrifft ein Verfahren zur Verarbeitung von selbstklebenden Stanzteilen zum Verschluss von Öffnungen in einem Fahrzeugelement wie Batteriegehäusen. Die Erfindung betrifft darüber hinaus auch eine Applikationseinheit zur Verarbeitung von selbstklebenden Stanzteilen zum Verschluss von Öffnungen in einer Automobilkarosse oder in Batteriegehäusen.

Bei der Herstellung von Kraftfahrzeugen entsteht häufig das Problem, dass in Karosserieteilen eingebrachte Öffnungen nach Bearbeitungsvorgängen wieder verklebt werden müssen. Beispielsweise können Karosserieteile mit Flüssigkeit oberflächenbehandelt werden. Die zur Oberflächenbehandlung erforderliche Flüssigkeit läuft über in die Karosserieteile vorher eingebrachte Öffnungen von selbst ab. Nachträglich werden die Öffnungen wieder verschlossen. Das Verschließen der Öffnungen erfolgt häufig per Hand, indem Stanzteile von einem Stanzteilband oder einem Stanzteilblatt abgenommen und per Hand auf die Öffnungen aufgeklebt werden. Die Stanzteile weisen eine Trägerschicht auf und eine auf der einen Seite der Trägerschicht aufgebrachte Klebmasseschicht. Die Klebmasseschicht ist in der Regel vollflächig auf die Trägerschicht aufgebracht.

Im Stand der Technik sind darüber hinaus die Applikation von Stanzteilen mittels Roboterarmen bekannt. Dazu wird üblicherweise eine Stanzteilrolle, auf der ein Stanzteilband in herkömmlicher Weise aufgewickelt ist, zur Verfügung gestellt. Bei dem Stanzteilband handelt es sich in der Regel um einen sogenannten Liner, der bandförmig vorliegt. Auf diesen Liner sind der Reihe nach voneinander beabstandet Stanzteile mit Trägerschicht und Klebmasseschicht derart aufgebracht, dass die freie Seite der Klebmasseschicht auf dem Liner aufgeklebt ist, so dass die dem Liner gegenüberliegende Seite der Klebmasseschicht von der Trägerschicht abgedeckt ist, so dass die Klebmasse vollständig geschützt ist. Das Stanzteilband kann dann aufgewickelt werden, und zwar so, dass der Liner wicklungsaußenseitig und die Stanzteile wicklungsinnenseitig auf einer Stanzteilrolle angeordnet sind. Ebenso können Stanzteile wicklungsaußenseitig auf einer Stanzteilrolle angeordnet sind. Bekannterweise wird das freie Ende des Stanzteilbandes abgezogen und in einer Vorrichtung eingespannt, und ein Roboterarm saugt die Stanzteile nacheinander vom Stanzteilband ab. Dazu ist der Roboterarm rüsselartig ausgebildet und saugt das Stanzteil an der Trägerschicht an, löst es von dem Liner ab und drückt das Stanzteil auf die Öffnung in der vorgegebenen Position.

Aus der DE 10 2010 051 786 A1 ist ein Verfahren und eine Vorrichtung zum automatisierten Aufbringen eines Klebeelements auf ein Fahrzeugbauteil bekannt. Dabei wird mittels mehrerer Fügestempel eines Fügewerkzeugs jeweils ein Klebeelement von einem Trägerelement gelöst und anschließend auf das Fahrzeugbauteil aufgebracht.

Darüber hinaus sind Applikatoren in Form von Etikettenspendern bekannt. Dabei ist der Etikettenspender an einem Roboterarm angeordnet. Der Etikettenspender weist die Stanzteilrolle auf. Die Stanzteilrolle wird zu einer Andruckwalze geführt und der Liner automatisch abgezogen und das Stanzteil durch Verfahren des Etikettenspenders mithilfe der Andruckwalze auf das Loch aufgedrückt. Nachteiligerweise erfordert die exakte Abrollung eine präzise Bewegung des Roboterarms, die nur durch geringe Bewegungsgeschwindigkeit des Roboters erreicht werden kann. Weiterhin ist an diesem Verfahren nachteilig, dass es platzaufwändig ist, da der Etikettenspender mithilfe des Roboterarms über eine gewisse Strecke gezogen werden muss. Das zum Beispiel ist nachteilig in schlecht zugänglichen Bereichen eines Autoblechs, beispielsweise, wenn die zu verschließende Öffnung direkt neben einer hochgebogenen Kante platziert ist. Weiterhin vergrößert sich das Problem überproportional, je größer das zu verspendende Stanzteil ist, weil alle Bauteile entsprechend groß dimensioniert werden müssen.

Aus der DE 10 2018 217 921 A1 ist Verfahren zum automatisierten Aufbringen eines selbstklebenden Stanzteils auf ein Fahrzeugelement durch eine an einem Roboterarm befestigte Applikationseinheit, wobei mittels eines Zylinders, aufweisend eine Wirkachse (W) und umfassend einen Vakuumstempel, ein selbstklebendes Stanzteil von einem Stanzteilband, aufweisend eine Längsrichtung (L), abgelöst wird und dann auf ein Fahrzeugelement aufgestempelt wird,
- wobei das Stanzteilband über eine Umlenkeinheit geführt wird, und
- das Stanzteilband durch die Umlenkeinheit in eine Übernahmeposition vor den Vakuumstempel bewegt wird, wobei
- in der Übernahmeposition ein Vakuum in dem Vakuumstempel aktiviert wird und das selbstklebende Stanzteil durch das Vakuum am Vakuumstempel fixiert wird, und
- das selbstklebende Stanzteil von dem Stanzteilband abgelöst wird, indem die Umlenkeinheit mindestens so weit von der Wirkachse (W) des Zylinders wegbewegt wird, dass das selbstklebende Stanzteil vollständig von dem Stanzteilband abgelöst wird, und
das selbstklebende Stanzteil auf dem Fahrzeugelement aufgebracht wird, indem der Vakuumstempel durch den Zylinder aus der Übernahmeposition entlang der Wirkachse (W) in eine Applikationsposition gebracht wird, in der das selbstklebende Stanzteil auf das Fahrzeugelement gestempelt wird.

Problematisch ist oftmals, dass allein durch den Stempelvorgang das Stanzteil nicht mit ausreichendem Druck auf das Fahrzeugelement aufgepresst wird. Insbesondere im Bereich des Außenrands der Kontur des Stanzteils besteht die Gefahr, dass sich dieses aufgrund des unzureichenden Anpressdruckes ablöst. Insbesondere der Außenrand der Kontur eines derartigen Stanzteils sollte daher mit entsprechend hohem Druck angepresst werden, um ein Ablösen sicher zu verhindern.

Dieses Problem tritt insbesondere bei der Applikation eines großen Stanzteils auf, bei dem die Gefahr besteht, dass trotz des Drucks beim Verspenden die Benetzung der Klebmasse auf dem Substrat nicht ausreichend ist. Ein besonderes Problem stellen darüber hinaus noch Stanzteile dar, die Gehäuse mit Überdruck verschließen.

Eine besondere Bedeutung im Bereich des Druckmanagements im Inneren von Gehäusen haben sogenannten Überdrucksicherungen, die teilweise auch als "Berstsysteme" bezeichnet werden. Solche zumeist konstruktiv komplexeren Überdrucksicherungen dienen beispielsweise bei elektronischen Geräten dem Schutz der verbauten Komponenten und ermöglichen es, bei Erreichen eines bestimmten Innendruckes einen Druckausgleich mit der Umgebung zu erlauben, indem der Überdruck im Zuge einer Entlüftung abgelassen werden kann.

Entsprechende Überdrucksicherungen sind dabei insbesondere auch für Batteriegehäuse relevant, wie sie heutzutage beispielsweise im Bereich der Elektromobilität zum Einsatz kommen. Diese Batteriegehäuse umfassen in ihrem Inneren die Bestandteile der elektrochemischen Zellen, die der elektrochemischen Speicherung und Gewinnung von Energie dienen und beispielsweise in der Form von sogenannten Pouch-Zellen vorliegen. Entsprechende elektrochemische Zellen, beispielsweise Lithium-Ionen-Batterien, stellen dabei komplexe und in einigen Fällen auch störungsanfällige Systeme dar, insbesondere da sie in vielen Fällen brennbare Substanzen umfassen, insbesondere Elektrolyte, und im Betrieb hohe Temperaturen auftreten können.

Infolgedessen kann es bei Batterien im schlechtesten Fall zu einem sogenannten thermischen Durchgehen kommen. Im Zuge eines solchen thermischen Durchgehens kommt es durch die freigesetzten Gase bzw. die Verdampfung von flüssigen Komponenten in vielen Fällen zu einem starken Druckaufbau im Inneren des Batteriegehäuses, welcher zu einer unkontrollierten Zerstörung des Batteriegehäuses führen kann, wodurch wiederum umliegende Batteriegehäuse beschädigt werden können, so dass im schlimmsten Fall eine ungewünschte Kettenreaktion resultieren kann.

Aus diesem Grund sind leistungsfähige Überdrucksicherungen für Batteriegehäuse besonders sicherheitsrelevant. Die zunehmende Relevanz der Elektromobilität im Bereich der Fahrzeugindustrie und der zunehmende Einsatz von elektrochemischen Energiespeichern führt entsprechend dazu, dass heutzutage ein stetes Interesse an der Verbesserung von Überdrucksicherungen besteht, die insbesondere für den Einsatz mit Batteriegehäusen geeignet sind.

Aus der EP 4 306 604 A1 ist ein Stanzteil zum dauerhaften Verschließen von durchgehenden Ausnehmungen mit Überdrucksicherung bekannt, umfassend:
i) eine Klebeschicht umfassend eine Klebemasse und
ii) eine auf der Klebeschicht angeordnete Trägerschicht, umfassend eine erste Trägerlage,
wobei das Stanzteil einen Drucköffnungsbereich umfasst, der zumindest abschnittsweise von einem in der Trägerschicht ausgebildeten Schwächungsbereich umgeben ist, wobei die mittlere Dicke der Trägerschicht im Schwächungsbereich kleiner ist als die mittlere Dicke der Trägerschicht im Drucköffnungsbereich.

Das Stanzteil ist dazu eingerichtet, dass das Einwirken eines vorbestimmten Öffnungsdrucks auf den Drucköffnungsbereich des Stanzteils im Schwächungsbereich zumindest teilweise irreversibel zerstört und im Stanzteil ein Durchgangsloch ausbilden.

Diese Stanzteile müssen fest auf dem Batteriegehäuse verklebt sein, weil ansonsten bei Druckaufbau kein plötzliches Aufplatzen an der Sollbruchstelle auftritt, sondern sich das Stanzteil im Randbereich aufgrund der unzureichenden Verklebung vorzeitig ablöst, so dass sich ein Kanal bilden kann, durch den Gase aus dem Inneren des Gehäuses entweichen können. Dadurch kann der Sicherheitseffekt verpuffen.

Eine zusätzliche Herausforderung bei diesem Stanzteil besteht darin, dass im inneren Bereich des Stanzteils eine Aluminium-Schicht unter der folienartigen Deckschicht vorhanden ist. Dadurch ergibt sich ein stufenartiger Übergang in dem Stanzteil. Insbesondere den äußeren Kreisring nach der Stufe fest auf dem Untergrund anzudrücken, erweist sich als schwierig.

Wird auf der anderen Seite beim Spendevorgang durch den Vakuumstempel zu viel Druck ausgeübt, kann das Batteriegehäuse beschädigt werden. Bei der Applikation darf der Schwächungsbereich nicht beschädigt werden. Durch den Mehrschichtaufbau dieser Stanzteile ist das Stanzteil im zentralen Bereich dicker als im äußeren transparenten Bereich, was einen korrekten Andruck mit einem Stempel erschwert.

Es ist daher in einem ersten Aspekt Aufgabe der vorliegenden Erfindung, ein Verfahren zur Verarbeitung von selbstklebenden Stanzteilen zur Verfügung zu stellen, das die oben genannten Nachteile insbesondere die Gefahr des ungewollten Wiederablösens verringert.

Es ist in einem zweiten Aspekt Aufgabe der Erfindung, eine Applikationseinheit zur Verfügung zu stellen, mit dem Stanzteile aufgeklebt werden können und mit dem oben genannten Nachteile insbesondere die Gefahr des ungewollten Wiederablösens verringert werden.

Die Aufgabe wird durch das Verfahren gemäß Anspruch 1 gelöst. Vorteilhafte Ausführungsformen der Verfahren ergeben sich aus den Unteransprüchen.

Demgemäß betrifft die Erfindung ein Verfahren zum automatisierten Aufbringen eines selbstklebenden Stanzteils auf ein Fahrzeugelement wie Batteriegehäuse durch eine an einem Roboterarm befestigte Applikationseinheit, wobei mittels eines Zylinders, aufweisend eine Wirkachse (W) und umfassend einen Vakuumstempel, ein selbstklebendes Stanzteil von einem Stanzteilband aufweisend eine Längsrichtung (L) abgelöst wird und dann auf ein Fahrzeugelement aufgestempelt wird,
- wobei das Stanzteilband zur Verfügung gestellt wird,
- der Vakuumstempel in eine Übernahmeposition bewegt wird,
- wobei in der Übernahmeposition ein Vakuum in dem Vakuumstempel aktiviert wird,
- das selbstklebende Stanzteil durch Bewegen des Vakuumstempels in Richtung des selbstklebenden Stanzteils mittels des Vakuums am Vakuumstempel fixiert wird,
- das selbstklebende Stanzteil von dem Stanzteilband abgelöst wird, indem der Vakuumstempel mindestens so weit wegbewegt wird, dass das selbstklebende Stanzteil vollständig von dem Stanzteilband abgelöst wird, und
- der Vakuumstempel in eine Position über das Fahrzeugelement geführt wird und das selbstklebende Stanzteil auf dem Fahrzeugelement aufgebracht wird, indem der Vakuumstempel durch den Zylinder aus der Übernahmeposition entlang der Wirkachse (W) in eine Applikationsposition gebracht wird, in der das selbstklebende Stanzteil auf das Fahrzeugelement gestempelt wird,
- der Vakuumstempel nach dem Stempeln wegbewegt wird.

Erfindungswesentlich ist, dass eine separate Rolleneinheit umfassend mindestens eine Rolle vorgesehen ist, die nach dem Stempeln zum Stanzteil geführt und so bewegt wird, dass die mindestens eine Rolle den Außenrand der Kontur des Stanzteils abfährt und das Stanzteil so auf das Fahrzeugelement anpresst.

Gemäß einer Variante betrifft die Erfindung ein Verfahren zum automatisierten Aufbringen eines selbstklebenden Stanzteils auf ein Fahrzeugelement wie Batteriegehäuse durch eine an einem Roboterarm befestigte Applikationseinheit, wobei mittels eines Zylinders, aufweisend eine Wirkachse (W) und umfassend einen Vakuumstempel, ein selbstklebendes Stanzteil von einem Stanzteilband, aufweisend eine Längsrichtung (L), abgelöst wird und dann auf ein Fahrzeugelement aufgestempelt wird,
- wobei das Stanzteilband über eine Umlenkeinheit geführt wird, und
- das Stanzteilband durch die Umlenkeinheit in eine Übernahmeposition vor den Vakuumstempel bewegt wird, wobei
- in der Übernahmeposition ein Vakuum in dem Vakuumstempel aktiviert wird und das selbstklebende Stanzteil durch das Vakuum am Vakuumstempel fixiert wird, und
- das selbstklebende Stanzteil (7) durch Bewegen des Vakuumstempels in Richtung des selbstklebenden Stanzteils (7) mittels des Vakuums am Vakuumstempel (6) fixiert wird, und
- das selbstklebende Stanzteil von dem Stanzteilband abgelöst wird, indem die Umlenkeinheit mindestens so weit von der Wirkachse (W) des Zylinders wegbewegt wird, dass das selbstklebende Stanzteil vollständig von dem Stanzteilband abgelöst wird, und
- das selbstklebende Stanzteil auf dem Fahrzeugelement aufgebracht wird, indem der Vakuumstempel durch den Zylinder aus der Übernahmeposition entlang der Wirkachse (W) in eine Applikationsposition gebracht wird, in der das selbstklebende Stanzteil auf das Fahrzeugelement gestempelt wird,
- der Vakuumstempel nach dem Stempeln wegbewegt wird.

Erfindungsgemäß können der Vakuumstempel und die Rolleneinheit als Baugruppen innerhalb der Applikationseinheit unabhängig voneinander bewegt werden. Das heißt, zunächst wird der Vakuumstempel zum Stempel hin- und nach dem Stempeln wieder weggeführt, ohne dass sich die Position der Rolleneinheit verändert. Anschließend wird die Rolleneinheit zum Stanzteil hin- und weggeführt, wobei der Vakuumstempel ortsfest bleibt. Alternativ sind der Vakuumstempel und die Rolleneinheit so an der Applikationseinheit befestigt, dass bei Bewegung der Applikationseinheit beide Baugruppen gleichzeitig verschwenkt werden.

Unter einem Fahrzeugelement soll ein Teil einer Karosserie verstanden werden, zum Beispiel eine Automobilkarosserie oder ein Teil davon, ein einzelnes Blech, ein Chassis, oder ein anderes Element, das als Teil einer Karosserie verstanden wird. Hierunter können auch Bauteile fallen, die den Innenraum oder Trägerstrukturen eines Fahrzeugs betreffen. Des Weiteren zählen in einem Fahrzeug vorhandene Gehäuse dazu, beispielsweise ein Gehäuse eines elektronischen Geräts oder einer Batterie, besonders bevorzugt einer Batterie. Die Fahrzeugelemente können aus verschiedenen Materialien bestehen, zum Beispiel aus Metallen, Kunststoffen, Naturmaterialien, Verbundwerkstoffen oder Kompositmaterialien, beispielsweise umfassend Glas oder Kohlefasern.

Im erfindungsgemäßen Sinne ist das Verfahren nicht auf die geschilderten Fahrzeugelementen beschränkt, sondern ist auf allen Substraten, bevorzugt überdruckgesicherten Substraten, die eine durch ein klebendes Stanzteil zu verschließende Ausnehmung aufweisen, einsetzbar.

Unter einem selbstklebendem Stanzteil sollen im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen verstanden werden die mindestens einseitig mit einem Haftkleber beschichtet sind. Aber auch selbstklebende Stanzteile, die beidseitig mit einem Haftkleber beschichtet sind können mit dem erfindungsgemäßen Verfahren verarbeitet werden. Ein selbstklebendes Stanzteil ist vorzugsweise rund oder oval, kann aber auch eine rechteckige oder quadratische Grundform aufweisen. Die Größe eines Stanzteils ist variabel und auf den jeweiligen Einsatzzweck angepasst, sprich auf die Abmaße des zu maskierenden Fahrzeugelements.

Stanzteile, die sich besonders vorteilhaft mit dem erfindungsgemäßen Verfahren verspenden lassen, sind in der EP 4 306 604 A1 beschrieben.

Die selbstklebenden Stanzteile sind auf einem Stanzteilband aufgebracht. Ein Stanzteilband hat eine Vorder- und eine Rückseite. Unter einem Stanzteilband ist im Sinne der Erfindung ein Band zu verstehen, auf welches die klebrige Seite eines selbstklebenden Stanzteils aufgebracht ist und diese teilweise oder vollständig abdeckt. Die Seite, auf der selbstklebende Stanzteile aufgebracht sind, wird im Sinne dieser Erfindung als Vorderseite des Stanzteilbandes definiert, die Rückseite des Stanzteilbandes wird als Rückseite definiert. Dem Fachmann ist solch ein Stanzteilband auch als sogenannter "Liner" bekannt. Das Stanzteilband soll zwar an der Klebemasse des selbstklebenden Stanzteils haften, aber keine innige, also stoffschlüssige, Klebeverbindung mit diesem eingehen, damit das Stanzteilband bei der Verarbeitung der selbstklebenden Stanzteile möglichst rückstandslos entfernt werden kann. Stanzteilbänder können aus verschiedenen Materialien bestehen. Als Stanzteilband eignen sich bevorzugt nicht-fusselnde Materialien, die keine stoffschlüssige Verbindung mit der Klebmasse eingehen, wie beispielsweise Folien aus Polyethylen oder Polypropylen.

Ein Stanzteilband weist eine Längsrichtung auf. Unter einer Längsrichtung L des Stanzteilbandes soll dabei diejenige Richtung verstanden werden, in der ein Stanzteilband üblicherweise von einer Spule oder einem Wickel abgewickelt wird. Sie wird durch die längliche Ausdehnung des Stanzteilbandes bestimmt. Das Stanzteilband, samt der darauf befindlichen Stanzteile, ist dann üblicherweise auf eine Spule oder einen Wickel aufgewickelt. Die Spule mit aufgewickelten Stanzteilen wird im Sinne dieser Erfindung als Materialspule verstanden.

Erfindungsgemäß wird ein selbstklebendes Stanzteil in einer Übernahmeposition bereitgestellt, von dem Vakuumstempel von dem Stanzteilband abgelöst und nach dem klassischen "Pick-and-Place"-Verfahren durch eine Bewegung des Vakuumstempels zum Verspendeort des Stanzteils geführt und an der entsprechenden Stelle durch den Zylinder direkt auf das Fahrzeugelement aufgestempelt.

Erfindungsgemäß wird gemäß einer Alternative das Stanzteilband über eine Umlenkeinheit geführt. Eine Umlenkeinheit im Sinne der Erfindung ist eine Vorrichtung, mit der das Stanzteilband geführt und in seiner Richtung umgelenkt wird. Üblicherweise hat eine Umlenkeinheit mindestens eine Oberseite und eine Unterseite. Vorzugsweise wird das Stanzteilband mit seiner Rückseite über die Oberseite der Umlenkeinheit geführt, um eine Kante geführt, die die Oberseite einer Umlenkeinheit mit der Unterseite verbindet, und dann auf der Unterseite einer Umlenkeinheit weitergeführt. Die Umlenkeinheit ist somit in der Regel etwas breiter als das Stanzteilband auszuführen; ihre Länge kann sich auf die Länge eines Stanzteils beschränken, wobei die Länge eines Stanzteils durch seine Ausdehnung in Richtung der Längsrichtung L des Stanzteilbandes gemeint ist. Die Umlenkeinheit ist so konfiguriert, dass das Stanzteilband über diese "hinweggleiten" kann, insbesondere also keine Elemente aufweist, die dazu führen können, dass das Stanzteilband verhakt, einreist oder von der Umlenkeinheit abrutscht. Bei der Führung über die Umlenkeinheit entsteht weiterhin nur eine geringe Reibkraft zwischen der Oberfläche der Oberseite der Umlenkeinheit und der Rückseite des Stanzteilbandes bzw. zwischen der Oberfläche der Unterseite der Umlenkeinheit und der Rückseite des Stanzteilbandes. Dadurch kann das Stanzteilband mit geringem Kraftaufwand über die Umlenkeinheit befördert werden.

Gemäß diesem erfindungsgemäßen Verfahren wird mittels der Umlenkeinheit mindestens ein selbstklebendes Stanzteil in einer Übernahmeposition bereitgestellt, in der das selbstklebende Stanzteil durch einen Zylinder mittels eines Vakuumstempels von dem Stanzteilband abgelöst wird.

Unter einem Zylinder soll im Sinne dieser Erfindung ein mechanischer oder elektromechanischer Aktor verstanden werden, der eine bewegliche Hubstange umfasst, deren Bewegungsrichtung eine Gerade entlang einer Wirkachse W beschreibt. Bei dem Zylinder kann es sich beispielsweise um einen Pneumatikzylinder oder einen Hydraulikzylinder handeln. Der Zylinder kann als einfachwirkender oder doppeltwirkender Zylinder ausgeführt sein. Besonders bevorzugt kann ein doppeltwirkender Zylinder sein, da durch seine zweikammrige Ausführung eine bessere Steuerung und damit eine genauer Positionierbarkeit der Kolbenstange erlaubt wird. Bei dem Zylinder kann es sich auch um einen Elektrohubzylinder handeln. Aber auch andere mechanisch oder elektromechanische Aktoren, die eine ausreichend exakte Positionierung erlauben sind als Zylinder einsetzbar.

Unter einem Vakuumstempel soll im Sinne der Erfindung ein speziell geformter Sauggreifer verstanden werden. Der Vakuumstempel ist an einen Vakuum-Erzeuger angeschlossen. Dies kann wahlweise auch über ein Ventil erfolgen, welches durch eine Steuereinheit gesteuert wird. Der Vakuumstempel ist über die Hubstange mit dem Zylinder verbunden. Sobald der Vakuumstempel die Oberfläche des selbstklebenden Stanzteils berührt und die Oberfläche gegen den Umgebungsdruck abdichtet, wird ein Unterdruck erzeugt, der eine Haltekraft zur Folge hat, wodurch das selbstklebende Stanzteil an dem Vakuumstempel fixiert wird. Der Vakuumstempel kann auch mit einer Sensorik ausgestattet sein, die es ermöglicht die Saugkraft und/oder die Stempelkraft zu messen. Unter der Stempelkraft ist diejenige kraft zu verstehen, die aufgebracht wird, wenn der Vakuumstempel ein selbstklebendes Stanzteil auf ein Fahrzeugelement drückt. Durch den erzeugten Andruck wird eine klebende Verbindung zwischen selbstklebenden Stanzteil und dem Fahrzeugelement erzeugt.

Erfindungsgemäß umfasst die Rolleneinheit eine oder zwei Rollen.

Die Rolleneinheit ist insbesondere über einen der oben genannten Zylinder verfahrbar, so dass die Rolleneinheit in der Höhe verstellt werden kann. Nach dem Aufbringen des Stanzteils auf das Fahrzeugelement wird zunächst der Vakuumstempel weggeführt und anschließend die Rolleneinheit in Richtung des Stanzteils geführt, bis die Rolleneinheit eine Position über dem Stanzteil eingenommen hat. Anschließend wird die Rolleneinheit so abgesenkt, dass die mindestens eine Rolle auf dem Stanzteil aufliegt.

Erfindungsgemäß wird unter Absenken der Rolleneinheit auch verstanden, dass innerhalb der Rolleneinheit nur die mindestens eine Rolle über eine entsprechende Achse abgesenkt wird. Die Rolleneinheit umfassend mindestens eine Rolle ist vorzugsweise unabhängig von dem Vakuumstempel vertikal zum Fahrzeugelement verfahrbar.

Weiterhin ist die mindestens eine Rolle der Rolleneinheit in eine Richtung von der Zentralachse oder Mittelpunktsachse der Rolleneinheit nach außen weisend verstellbar, insbesondere in radialer Richtung der Rolleneinheit. Auf diese Weise kann die Position der mindestens eine Rolle an die Größe und Kontur des Stanzteils angepasst werden. Durch diese Anpassung ist die von den Rollen überwaltzte Fläche den Gegebenheiten veränderbar. Wenn die Rolleneinheit zum Anpressen rotiert, lassen sich die Durchmesser der überwaltzten Kreisringe leicht anpassen.

Weiterhin vorzugsweise kann die mindestens eine Rolle der Rolleneinheit jeweils mittels eines des oben beschriebenen Zylinders in der Höhe verstellt werden. Die mindestens eine Rolle wird nach dem Verschwenken der Rolleneinheit zum Stanzteil aus der Ruheposition herausgefahren und zum Anrollen beziehungsweise Andrücken des Stanzteils genutzt.

Als Rollen können walzenförmige Rollen mit einer metallischen Oberfläche, sei es als Vollmetallzylinder oder als metallsicher Hohlzylinder eingesetzt werden. Darüber hinaus kann die Oberfläche der Rollen einen Schaumstoff- oder Gummiüberzug aufweisen, um Beschädigungen der Oberfläche des Stanzteils zu verringern.

Vorzugsweise sind in der Rolleneinheit zwei sich radial gegenüberliegende Rollen vorhanden. Die Breite der Rollen liegt weiter vorzugsweise zwischen 5 und 30 mm, weiter vorzugsweise zwischen 10 und 20 mm.

Falls nur eine Rolle vorgesehen ist, kann diese eine Breite aufweisen, die dem maximalen Durchmesser des Stanzteils entspricht. Insbesondere wenn das Stanzteil kreisrund ist, entspricht die Breite der Rolle dem Durchmesser des Stanzteils.

Wenn ein oben geschildertes Stanzteil zum dauerhaften Verschließen von durchgehenden Ausnehmungen mit Überdrucksicherung verspendet werden soll, das einen durch einen Schwächungsbereich abgegrenzten Drucköffnungsbereich aufweist, wobei der Schwächungsbereich insbesondere durch Anstanzungen erzeugt wird, wird die Breite der Rollen so gewählt, dass die Rollen beim Anpressen den Schwächungsbereich nicht überstreichen, sondern lediglich den äußeren Kreisring außerhalb des Drucköffnungsbereiches anwalzen. Auf diese Weise wird sichergestellt, dass der Schwächungsbereich wie die Anstanzungen durch das Überrollen nicht beschädigt wird.

Erfindungsgemäß wird der Vakuumstempel nach dem Stempeln wegbewegt, und die Rolleneinheit zum Stanzteil bewegt. Anschließend wird die zumindest eine Rolle auf das Stanzteil abgesenkt. Die mindestens eine Rolle fährt den Außenrand der Kontur des Stanzteils ab und presst das Stanzteil so auf das Fahrzeugelement sicher an.

Hierzu wird nach dem Stempelvorgang, also dem Aufbringen des Stanzteils auf das Fahrzeugelement, der Vakuumstempel leicht angehoben, so dass sich Spalt zwischen Oberfläche des Fahrzeugelements und Unterseite des Vakuumstempels ergibt, und anschließend wegbewegt, und die Rolleneinheit zum Stanzteil bewegt. Anschließend wird die mindestens eine Rolle vorzugsweis in einer zur Oberfläche des Fahrzeugelements vertikalen Bewegung aus der Ruheposition in Richtung des Stanzteils bewegt, bis die mindestens eine Rolle mit dem gewünschten Druck auf die Oberfläche des Stanzteils presst. Im Anschluss wird die Rolleneinheit derart bewegt, dass die mindestens eine Rolle zumindest den Außenrand der Kontur des Stanzteils abfährt. Wenn das Stanzteil kreisrund ist, reicht hierfür eine Rotation der Rolleneinheit um die Zentralachse oder Mittelpunktsachse (zentrale Wirkachse). Wenn das Stanzteil anstelle einer Kreisform eine Langlochform aufweist, kann die Rolleneinheit neben der rotatorischen Bewegung auch eine translatorische Bewegung aufweisen, so dass der Außenrand der Kontur des Stanzteils vollumfänglich abgefahren wird. Durch eine entsprechende Führung der Rolleneinheit (gegebenenfalls samt der Applikationseinheit) können prinzipiell auch beliebige Formen des Stanzteils abgefahren werden.

Die mindestens eine Rolle kann so innerhalb der Rolleneinheit angeordnet sein, dass die Rolle innerhalb der Kontur des Stanzteils liegt und exakt am Außenrand der Kontur des Stanzteils entlang bewegt wird.

Die mindestens eine Rolle kann alternativ so angeordnet sein, dass der Außenrand der Kontur des Stanzteils innerhalb der Walzenfläche der mindestens einen Rolle liegt, die mindestens eine Rolle also teilweise über den Außenrand der Kontur hinausragt.

Durch dieses zusätzliches Andrücken des Stanzteils mittels der Rolleneinheit ist gewährleistet, dass das Stanzteil mit dem erforderlichen Druck auf dem Fahrzeugelement fixiert wird, was ein ungewolltes Ablösen sicher verhindert. Insbesondere wenn das Stanzteil sehr steif ist und/oder eine große Dicke aufweist, ist dieses zusätzliche Anpressen wünschenswert, um ein Ablösen zu verhindern.

Durch das erfindungsgemäße Verfahren gemäß der bevorzugen Variante wird somit ein selbstklebendes Stanzteil in einer Übernahmeposition bereitgestellt und ausgehend von dieser Position durch den Zylinder direkt auf das Fahrzeugelement aufgestempelt. Dies hat gegenüber der Applikation mittels eines Roboterarmes nach dem Pick-and-place-Verfahren gemäß Anspruch 1 die Vorteile, dass eine Vielzahl von Fahrwegen entfallen und auch das Applizieren eines selbstklebenden Stanzteils in kürzerer Zeit erfolgen kann. Die Vielzahl von Fahrstrecken für den Roboterarm wird vermieden, da der Roboterarm eine Position über einem Fahrzeugelement anfahren kann und in dieser Position ein selbstklebendes Stanzteil aufstempeln kann. Da die Applikationseinheit eine Materialspulenaufnahme zur Aufnahme einer Materialspule und eine Stanzteilbandspulenaufnahme zur Aufnahme einer Stanzteilbandspule umfassen kann, werden die selbstklebenden Stanzteile mit dem Roboterarm mitgeführt. Das Anfahren einer Spendeposition entfällt damit. Zum anderen ist auch das Aufstempeln durch den Zylinder an sich, der nur eine lineare Bewegung ausführt, sehr zeiteffizient, da die "Stempelbewegung" des Zylinders mit einer hohen Geschwindigkeit ausgeführt werden. Eine Applikation direkt mittels eines Roboterarms wäre dagegen allein schon aufgrund der wesentlich größeren bewegten Massen der Einzelsegmente eines Roboters und der damit verbundenen Trägheit nicht so schnell möglich.

Das erfindungsgemäße Verfahren kann vorteilhaft weitergebildet werden, indem die Umlenkeinheit auf einer Geraden parallel zur Richtung der Längsrichtung (L) des Stanzteilbandes aus der Übernahmeposition in die Applikationsposition bewegt wird.

Das erfindungsgemäße Verfahren kann ebenso vorteilhaft weitergebildet werden, indem die Umlenkeinheit auf einer Kreisbahn aus der Übernahmeposition in die Applikationsposition bewegt wird, wobei die Drehachse (D) der Kreisbahn parallel oder senkrecht zu der Wirkachse (W) des Zylinders angeordnet ist.

Dies kann vorteilhaft sein, da eine Bewegung der Umlenkeinheit auf einer Kreisbahn durch eine einfache und platzsparende Mechanik, beispielsweise mittels eines Kugellagers und wenigstens einer Exzenterstange, welche durch einen pneumatischen, mechanischen oder elektromechanischen Aktor bewegt wird. Alternativ kann als Aktor auch ein Servomotor oder eine Schrittmotor eingesetzt werden, der die Exzenterstange bewegt oder direkt mit der Drehachse verbunden ist.

Die Umlenkeinheit kann so beispielsweise in die Übernahmeposition bewegt werden, wenn der Aktor aktiviert wird und in die Applikationsposition bewegt werden, wenn der Aktor deaktiviert wird. Eine Bewegung der Umlenkeinheit auf einer Kreisbahn, ist ebenfalls zeiteffizient, da lediglich die räumlich klein ausgedehnte Umlenkeinheit, in Bewegung versetzt werden muss. Die vorgenannten Ausrichtungen der Drehachse, können abhängig von der Anwendung vorteilhaft sein.

Das erfindungsgemäße Verfahren kann vorteilhaft weitergebildet werden, indem das selbstklebende Stanzteil in der Übernahmeposition bereits teilweise von dem Stanzteilband abgelöst ist.

Die zuvor erwähnte Kante der Umlenkeinheit, führt das Stanzteilband um die Umlenkeinheit herum. Die Kante weist dabei einen bestimmten Umlenkradius auf. Ist der Radius der Kante groß gewählt, so würde, wenn das selbstklebende Stanzteil nicht durch den Vakuumstempel fixiert werden würde, das Stanzteil auf dem Stanzteilband haften bleiben, um die Kante herumgeführt werden und auf die Unterseite der Umlenkeinheit gelangen. Wird der Radius der Kante allerdings klein gewählt, kommt es in der Regel dazu, dass sich ein selbstklebendes Stanzteil von dem Stanzteilband ablöst und sich nicht um die Kante herum bewegt. Das Selbstklebende Stanzteil wird mit anderen Worten von dem Stanzteilband "abgeschält". Dies führt dazu, dass das selbstklebende Stanzteil bereits teilweise abgelöst ist, und die Umlenkeinheit bereits aus der Übernahmeposition in die Applikationsposition bewegt werden kann, während der Zylinder den Vakuumstempel noch in der Übernahmeposition hält und das selbstklebende Stanzteil fixiert. Das Stanzteilband wird bei dieser weiteren vorteilhaften Weitebildung durch die Umlenkeinheit rückseitig von dem selbstklebenden Stanzteil abgezogen. Dies reduziert die Applikationszeit, da die Umlenkeinheit nicht mehr die Übernahmeposition einnehmen muss, sondern die Umlenkeinheit nur das selbstklebende Stanzteil in die Übernahmeposition befördern muss.

Das erfindungsgemäße Verfahren kann vorteilhaft weitergebildet werden, indem das Vakuum im Vakuumstempel vor Erreichen der Übernahmeposition und nach Erreichen der Applikationsposition deaktiviert wird.

Durch das Deaktivieren des Vakuums nach dem Erreichen der Applikationsposition kann sichergestellt werden, dass das selbstklebende Stanzteil nicht versehentlich durch das Vakuum am Vakuumstempel fixiert bleibt. Dies kann immer dann vorkommen, wenn die Kraft, die bedingt durch das Vakuum auf das selbstklebende Stanzteil einwirkt, größer ist als die Adhäsionskraft zwischen der haftklebrigen Klebeschicht und dem Fahrzeugelement.

Das erfindungsgemäße Verfahren kann vorteilhaft weitergebildet werden, indem zumindest in der Übernahmeposition das Stanzteilband rückseitig auf der Umlenkeinheit fixiert wird, indem ein in der Umlenkeinheit ausgebildetes Vakuum das Stanzteilband rückseitig ansaugt. Hierdurch kann sichergestellt werden, dass das Stanzteilband nicht verrutscht, wenn die Umlenkeinheit bewegt wird oder das selbstklebende Stanzteil in der Übernahmeposition durch das Vakuum des Vakuumstempels fixiert wird. Dies ist vorteilhaft, da dadurch zum einen fehlerhafte Applikationen vermieden werden können, zum Beispiel dass das selbstklebende Stanzteil mit sich selbst verklebt ist oder teilweise umknickt. Zum anderen wird vermieden, dass das Stanzteilband durch die Bewegung der Umlenkeinheit oder das Fixieren des selbstklebenden Stanzteils durch den Vakuumstempel beschädigt wird, zum Beispiel einreißt oder abreißt.

Das erfindungsgemäße Verfahren kann weitergebildet werden, indem in weiteren Schritten der Zylinder den Vakuumstempel aus der Applikationsposition entlang der Wirkachse (W) in die Übernahmeposition bewegt wird, und dann die Umlenkeinheit aus der Applikationsposition in die Übernahmeposition bewegt wird, und die vorangegangen Schritte mindestens ein weiteres Mal wiederholt werden, um mindestens ein weiteres selbstklebendes Stanzteil auf das Fahrzeugelement aufzustempeln. Durch diese weiteren Schritte werden Umlenkeinheit und Vakuumstempel wieder in die Übernahmeposition gebracht und das erfindungsgemäße Verfahren kann wiederholt zur Ausführung gebracht werden. Vorzugsweise bewegt der Roboterarm die Applikationseinheit vor dem nächsten Aufstempeln in eine weitere Position in der ein selbstklebendes Stanzteil auf einem Fahrzeugelement aufgebracht werden soll.

Das erfindungsgemäße Verfahren kann weitergebildet werden, indem das Stanzteilband vorbefördert wird, während der Zylinder den Vakuumstempel von der Übernahmeposition in die Applikationsposition bewegt, insbesondere, dass das Stanzteilband vorbefördert wird, während der Zylinder den Vakuumstempel von der Übernahmeposition in die Applikationsposition und wieder in die Übernahmeposition bewegt wird, sodass ein weiteres auf dem Stanzteilband aufgebrachtes selbstklebendes Stanzteil bereitgestellt wird. Durch diese vorteilhafte Weiterbildung kann zeitgleich zu der Applikation des Stanzteils durch den Zylinder, auf der Umlenkeinheit ein weiteres selbstklebendes Stanzteil bereitgestellt werden. Durch die zeitgleiche Ausführung kann die Applikationszeit reduziert werden.

An dem erfindungsgemäßen Verfahren ist vorteilhaft, dass durch den begrenzten Querschnitt des Vakuumstempels der Platzaufwand zum Aufstempeln sehr gering ist. Dies ermöglicht also auch die Applikation an schlecht zugänglichen Bereichen eines Fahrzeugelements, wie beispielsweise direkt neben hochgebogenen Kanten oder in Hohlkehlen. Besonders vorteilhaft ist dies im Vergleich zu Verfahren, die selbstklebende Stanzteile nach dem Prinzip von Etikettenspender aufbringen. Mit dem erfindungsgemäßen Verfahren ist das Applizieren auf gebogenen Fahrzeugelementen wesentlich erleichtert oder gar erst ermöglicht. Beispielsweise können mit dem erfindungsgemäßen Verfahren selbstklebende Stanzteile auch in Hohlkehlen aufgestempelt werden, was mit Roboter, die mit Applikatoren, die nach dem Prinzip des Etikettenspenders arbeiten auf Grund des begrenzten Platzangebots in Hohlkehlen häufig nicht möglich ist.

Dies kann vorteilhaft sein, da eine geradlinige Bewegung durch eine einfache und platzsparende Mechanik, beispielsweise mittels Linearlagern und wenigstens einer Exzenterstange, welche durch einen pneumatischen, mechanischen oder elektromechanischen Aktor bewegt wird, umgesetzt werden kann. Die Umlenkeinheit kann so beispielsweise in die Übernahmeposition bewegt werden, wenn der Aktor aktiviert wird und in die Applikationsposition bewegt werden, wenn der Aktor deaktiviert wird. Eine Bewegung der Umlenkeinheit auf einer Geraden, ist zudem zeiteffizient, da lediglich die räumlich klein ausgedehnte Umlenkeinheit, in Bewegung versetzt werden muss.

Darüber hinaus wird die erfindungsgemäße Aufgabe durch eine Applikationseinheit mit den Merkmalen des Anspruches 9 gelöst. Vorteilhafte Ausführungsformen ergeben sich aus den Unteransprüchen.

Demgemäß betrifft die Erfindung auch eine Applikationseinheit für selbstklebende Stanzteile, umfassend
- einen Zylinder aufweisend eine Wirkachse (W), umfassend einen Vakuumstempel, und der Vakuumstempel ein Vakuum bereitstellen kann,
- der Zylinder dazu ausgebildet ist,
- den Vakuumstempel in eine Übernahmeposition zu bewegen, in der der Vakuumstempel das selbstklebende Stanzteil fixiert, und
- den Vakuumstempel in eine Applikationsposition zu bewegen, in der das selbstklebende Stanzteil auf dem Fahrzeugelement aufgestempelt wird
- der Vakuumstempel nach dem Stempeln wegbewegt wird.

Erfindungswesentlich ist, dass eine separate Rolleneinheit umfassend mindestens eine Rolle vorgesehen ist, die nach dem Stempeln zum Stanzteil geführt und so bewegt wird, dass die mindestens eine Rolle den Außenrand der Kontur des Stanzteils abfährt und das Stanzteil so auf das Fahrzeugelement anpresst.

Gemäß einer bevorzugten Ausführungsform der Erfindung betrifft die Erfindung eine Applikationseinheit für selbstklebende Stanzteile, umfassend
- einen Zylinder aufweisend eine Wirkachse (W), umfassend einen Vakuumstempel, und der Vakuumstempel ein Vakuum bereitstellen kann, und
- eine Umlenkeinheit, die dazu ausgebildet ist, das Stanzteilband zu führen, und ausgebbildet ist
- eine Übernahmeposition einzunehmen, in der die Umlenkeinheit so konfiguriert ist, dass ein selbstklebendes Stanzteil vor dem Vakuumstempel positioniert ist oder
- eine Applikationsposition einzunehmen, in der die Umlenkeinheit so konfiguriert ist, dass sie außerhalb der Wirkachse (W) des Zylinders positioniert ist
- und der Zylinder dazu ausgebildet ist,
- den Vakuumstempel in eine Übernahmeposition zu bewegen, in der der Vakuumstempel das selbstklebende Stanzteil fixiert, oder
- den Vakuumstempel in eine Applikationsposition zu bewegen, in der das selbstklebende Stanzteil auf dem Fahrzeugelement aufgestempelt wird, wobei die Umlenkeinheit konfiguriert ist, um durch die Bewegung der Umlenkeinheit aus der Übernahmeposition in die Applikationsposition, ein selbstklebendes Stanzteil vollständig von dem Stanzteilband abzulösen und der Zylinder konfiguriert ist, um durch die Bewegung der Umlenkeinheit aus der Übernahmeposition in die Applikationsposition, ein selbstklebendes Stanzteil auf das Fahrzeugelement aufzustempeln.

Die Applikationseinheit kann vorteilhaft weitergebildet werden, indem die Umlenkeinheit so konfiguriert ist, dass die Bahn, die die Umlenkeinheit bei der Bewegung aus der Übernahmeposition in die Applikationsposition, eine Gerade beschreibt, wobei die Gerade parallel zur Längsrichtung (L) des Stanzteilbandes verläuft. Zu den Vorteilen diese Weiterbildung sei auf die vorangegangen Ausführungen zur Durchführung des Verfahrens verwiesen.

Die Applikationseinheit kann vorteilhaft weitergebildet werden, indem die Umlenkeinheit so konfiguriert ist, dass die Bahn, die die Umlenkeinheit bei der Bewegung aus der Übernahmeposition in die Applikationsposition, eine Kreisbahn beschreibt, wobei die Drehachse (D) der Kreisbahn parallel oder senkrecht zu der Wirkachse (W) des Zylinders angeordnet ist. Zu den Vorteilen diese Weiterbildung sei auf die vorangegangen Ausführungen zur Durchführung des Verfahrens verwiesen.

Die Applikationseinheit kann vorteilhaft weitergebildet werden, indem die Umlenkeinheit wenigstens eine Umlenkrolle umfasst. Durch eine Umlenkrolle kann die ein Einreißen oder ein Abreißen des Stanzteilbandes vermieden werden. Dies vermeidet Ausfallzeiten des Applikators.

Die Applikationseinheit kann vorteilhaft weitergebildet werden, indem die Applikationseinheit eine Materialspulenaufnahme zur Aufnahme einer Materialspule umfasst und eine Stanzteilbandspulenaufnahme, zur Aufnahme einer Stanzteilbandspule umfasst und die Stanzteilbandspulenaufnahme mit einer Antriebseinheit gekoppelt ist.

Die Applikationseinheit kann vorteilhaft weitergebildet werden, indem der Vakuumstempel eine an die Geometrie des selbstklebenden Stanzteils angepasste Geometrie aufweist und/oder dass der Vakuumstempel einen elastischen Gummistempel oder einen elastischen Schaum umfasst. Vorzugsweise ist der Vakuumstempel so geformt, dass er an die Kontur des selbstklebenden Stanzteils angepasst ist. Unter der Anpassung kann sowohl eine Anpassung an die zweidimensionale Kontur des selbstklebenden Stanzteils, als auch an eine dreidimensionale Kontur verstanden werden. Insbesondere kann es bevorzugt sein, dass der Vakuumstempel aus einem elastischen Gummi oder Kunststoff bestehet. Dies ermöglicht zum einen eine bessere Anpassung an die Form des selbstklebenden Stanzteils, zum anderen ermöglicht es einen Ausgleich von Unebenheiten oder Kurven auf einem Fahrzeugelement.

Weiterhin kann die Applikationseinheit weitergebildet werden, indem der Vakuumstempel wenigstens einen Drucksensor umfasst, oder gefedert gelagert ist. Dadurch können Mindestandruckwerte überwacht oder erzeugt werden. Dies kann vorteilhaft sein, da die Klebkraft u. a. von der Anpresskraft als auch von der Anpressdauer abhängig ist. Die haftklebrigen Schichten auf einem selbstklebenden Stanzteil sind in der Regel viskoelastische Schichten, die durch Krafteinwirkung auf einer Materialoberfläche auffließen. Insofern kann durch eine höhere Krafteinwirkung die Applikationszeit reduziert werden. Sofern also ein Mindestanpressdruck gewährleistet ist, kann nach einer bestimmten Zeit eine ausreichende Adhäsionskraft sichergestellt werden. Dadurch kann die Anpressdauer dann jedoch reduziert werden, da eine Sicherheitsmarge bei der Dauer des Anpressens reduziert werden kann. Dies führt zu einer weiteren Reduktion der Applikationszeit von selbstklebenden Stanzteilen. Dies ist besonders vorteilhaft, wenn sich die Geometrie auf einem oder unterschiedlichen Fahrzeugelementen unterscheidet, ist aber auch vorteilhaft bei der Prozessüberwachung bei der Fertigung einsetzbar.

Weiterhin kann die Applikationseinheit weitergebildet werden, indem die mindestens eine Rolle der Rolleneinheit ebenfalls wenigstens einen Drucksensor umfasst. Hierdurch ist wie bei dem Vakuumstempel sichergestellt, dass die mindestens eine Rolle mit dem gewünschten Druck auf das Stanzteil presst, damit sich eine ausreichende Adhäsionskraft einstellt.

Die Applikationseinheit kann vorteilhaft weitergebildet werden, indem die Applikationseinheit als wechselbarer Effektor für einen Roboterarm ausgeführt ist, insbesondere, dass die Applikationseinheit mindestens einen Schnellverschluss aufweist, über den zumindest elektrische Verbindungen und/oder Vakuumleitungen verbunden werden. Außerdem können eine Mehrzahl von erfindungsgemäßen Applikationseinheiten vorgehalten werden, und in dem Fall, dass das Material einer Materialspule in einer ersten Applikationseinheit aufgebraucht ist, eine zweite, bereits vorbereitete Applikationseinheit als "Austausch-Applikationseinheit" bereitzuhalten. Durch die Ausstattung der Applikationseinheit mit einem Schnellverschluss, kann zudem die Umrüstzeit eines Roboters reduziert werden. Beispielsweise kann ein Roboter, der zuerst selbstklebende Stanzteile mit einer ersten Geometrie aufstempeln soll durch einfachen Austausch der Applikationseinheit zur Applikation von selbstklebenden Stanzteilen mit einer zweiten Geometrie umgerüstet werden.

Das erfindungsgemäße Verfahren ist insbesondere dafür geeignet, Stanzteile zu verspenden, die als Überdrucksicherung in Batteriegehäusen fungieren, insbesondere im Bereich der Elektromobilität, beispielsweise in der Form von Batteriegehäusen von Hybridelektro-Kraftfahrzeugen (englisch: Hybrid Electric Vehicle, HEV), Hybridelektro-Kraftfahrzeugen mit externer Lademöglichkeit (englisch: Plug In Hybrid Electric Vehicle, PHEV) und Elektro-Kraftfahrzeugen mit Batterie (Battery Electric Vehicle, BEV).

Die Stanzteile sichern ein überdruckgesichertes Substrat, umfassend einen fluiddicht verschlossenen Innenraum mit zumindest einer fluiddicht verschlossenen Öffnung, wobei die verschlossene Öffnung mit einem Stanzteil fluiddicht verschlossen ist, wobei der Drucköffnungsbereich des Stanzteils die verschlossene Öffnung zumindest teilweise bedeckt, wobei das überdruckgesicherte Substrat dazu eingerichtet ist, dass das Stanzteil in Folge eines vorbestimmten Überdrucks im Innenraum im Schwächungsbereich zumindest teilweise irreversibel zerstört wird, so dass ein Druckabbau im Innenraum durch das im Stanzteil ausgebildete Durchgangsloch erfolgen kann.

Die Erfindung wird anhand verschiedener Ausführungsbeispiele in den Figuren 1 bis 10 beschrieben. Dabei zeigen:
- Fig. 1a: Seitenansicht einer erfindungsgemäßen Applikationseinheit gemäß einer ersten Ausführungsvariante
- Fig. 1b: Seitenansicht einer erfindungsgemäßen Applikationseinheit gemäß einer zweiten Ausführungsvariante
- Fig. 1c: Seitenansicht einer erfindungsgemäßen Applikationseinheit gemäß einer dritten Ausführungsvariante
- Fig. 1d: Seitenansicht einer erfindungsgemäßen Applikationseinheit gemäß einer vierten Ausführungsvariante
- Fig. 2: Seitenansicht im Anschnitt eines Vakuumstempel 6, in die erfindungsgemäßen Rollen nicht vorhanden sind
- Fig. 3a: Seitenansicht einer erfindungsgemäßen Applikationseinheit gemäß Figur 1a in einer schematischen Darstellung
- Fig. 3b: Seitenansicht einer erfindungsgemäßen Applikationseinheit gemäß Figur 1b in einer schematischen Darstellung
- Fig. 3c: Seitenansicht einer erfindungsgemäßen Applikationseinheit gemäß Figur 1c in einer schematischen Darstellung
- Fig. 3d: Seitenansicht einer erfindungsgemäßen Applikationseinheit gemäß Figur 1d in einer schematischen Darstellung
- Fig. 4: Seitenansicht eines erfindungsgemäßen Applikators gemäß einer ersten Ausführungsvariante - Umlenkeinheit und Vakuumstempel in Übernahmeposition
- Fig. 5: Seitenansicht eines erfindungsgemäßen Applikators gemäß einer ersten Ausführungsvariante - Umlenkeinheit und Vakuumstempel in Applikationsposition
- Fig. 6a: Draufsicht eines Applikators gemäß einer Ausführungsvariante - Umlenkeinheit und Vakuumstempel in Übernahmeposition
- Fig. 6b: Draufsicht eines Applikators gemäß einer Ausführungsvariante - Umlenkeinheit und Vakuumstempel in Applikationsposition
- Fig. 7a: Seitenansicht eines Applikators gemäß einer Ausführungsvariante - Umlenkeinheit und Vakuumstempel in Übernahmeposition
- Fig. 7b: Seitenansicht eines Applikators gemäß einer Ausführungsvariante - Umlenkeinheit und Vakuumstempel in Applikationsposition
- Fig. 8: Applikationseinheit an einem Roboterarm
- Fig. 9: Gegenüberstellung der Wegfolge eines Roboterarms bei der Applikation von selbstklebende Stanzteilen; a) mit dem alternativen Verfahren; b) nach dem pick-and-place-Verfahren

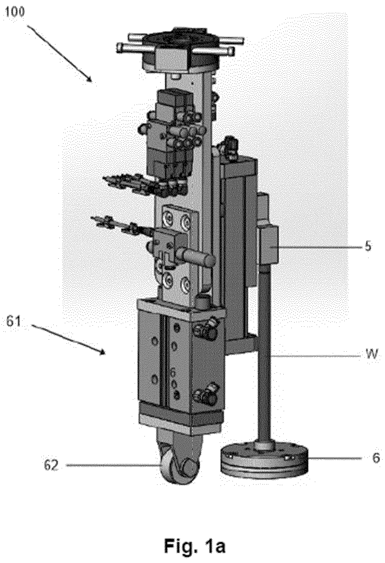

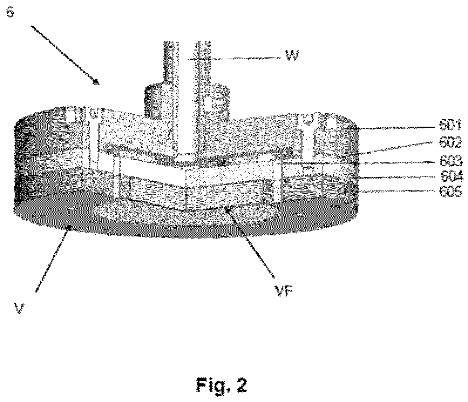

**Figur 1a** stellt eine erfindungsgemäße Applikationseinheit 100 gemäß einer besonders vorteilhaften Ausführungsvariante dar. Die Applikationseinheit 100 weist einen Zylinder 5 mit einer Wirkachse (W) auf, an der ein Vakuumstempel 6 vorhanden ist. Ein derartiger Vakuumstempel 6 ist in der Figur 2 im Detail erläutert. Der Vakuumstempel 6 ist in der Höhe verfahrbar. An der Applikationseinheit 100 ist zusätzlich eine Rolleneinheit 61 umfassend eine Rolle 62 vorgesehen. Die Rolleneinheit 61 ist mitsamt der Rolle 62 in der Höhe verfahrbar, und zwar unabhängig vom Vakuumstempel 6. Der Vakuumstempel 6 und die Rolleneinheit 61 sind so an der Applikationseinheit 100 befestigt, dass bei Bewegung der Applikationseinheit 100 beide Baugruppen gleichzeitig verschwenkt werden. Das heißt, zunächst wird die Applikationseinheit 100 so verschwenkt, dass der Vakuumstempel 6 ein Stanzteil 7 aufnimmt und zum (hier nicht gezeigten) Fahrzeugelement 1 führt, über der gewünschten Stelle abgesenkt wird, das Stanzteil 7 aufstempelt, hochgefahren wird und anschließend wegbewegt wird, indem gleichzeitig die Rolleneinheit 61 zur Position des Stanzteils 7 geführt wird, darüber positioniert wird, die Appliziereinheit 100 mit Rolleneinheit 61 so abgesenkt wird, dass die Rolle 62 auf dem Außenrand der Kontur des Stanzteils 7 aufliegt. Anschließend wird die Appliziereinheit 100 so bewegt, dass die Rolle 62 über den Außenrand der Kontur des Stanzteils 7 fährt und das Stanzteil 7 auf dem Untergrund anpresst.

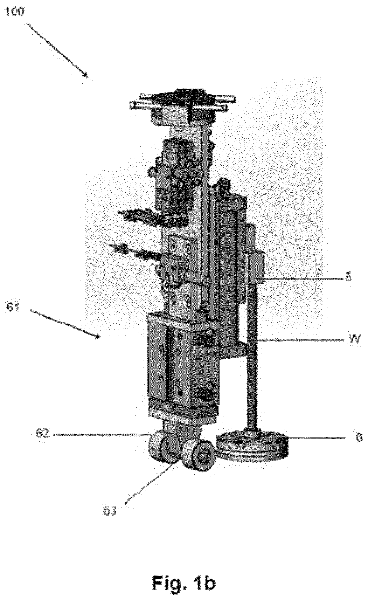

**Figur 1b** stellt eine erfindungsgemäße Applikationseinheit 100 gemäß einer besonders vorteilhaften zweiten Ausführungsvariante dar. Die Applikationseinheit 100 weist wieder einen Zylinder 5 mit einer Wirkachse (W) auf, an der ein Vakuumstempel 6 vorhanden ist. An der Applikationseinheit 100 ist zusätzlich eine Rolleneinheit 61 als Unterbaugruppe umfassend zwei Rollen 62, 63 vorgesehen. Die Rolleneinheit 61 ist mitsamt der Rolle 62 in der Höhe verfahrbar, und zwar unabhängig vom Vakuumstempel 6. Nach dem Applizieren des Stanzteils 6 durch den Vakuumstempel 7 wird die Appliziereinheit 100 samt Rolleneinheit 61 verfahren, so dass die Rolleneinheit 61 über dem Stanzteil 7 liegt. Anschließend wird die Appliziereinheit 100 mit Rolleneinheit 61 so abgesenkt wird, dass die Rollen 62, 63 jeweils auf dem Außenrand der Kontur des Stanzteils 7 aufliegen. Bei dieser Variante rotiert die gesamte Appliziereinheit 100 derart, dass beide Rollen 62, 63 über den Außenrand der Kontur des Stanzteils 7 fahren.

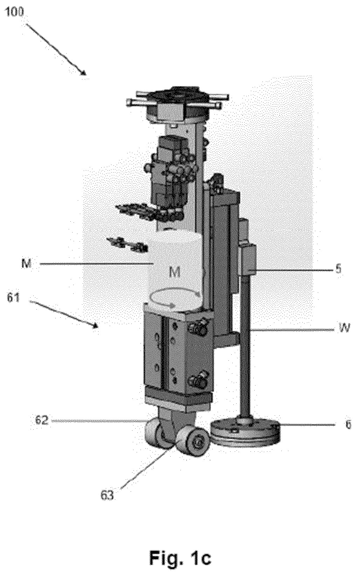

**Figur 1c** stellt eine erfindungsgemäße Applikationseinheit 100 gemäß einer besonders vorteilhaften dritten Ausführungsvariante dar. Die Applikationseinheit 100 weist wieder einen Zylinder 5 mit einer Wirkachse (W) auf, an der ein Vakuumstempel 6 vorhanden ist. An der Applikationseinheit 100 ist zusätzlich eine Rolleneinheit 61 als Unterbaugruppe umfassend zwei Rollen 62, 63 vorgesehen. Die Rolleneinheit 61 ist mitsamt der Rolle 62 in der Höhe verfahrbar, und zwar unabhängig vom Vakuumstempel 6. Mittels eines Motors M kann die Rolleneinheit 61 unabhängig von der sonstigen Appliziereinheit 100 um die eigene Achse rotieren. Nach dem Applizieren des Stanzteils 6 durch den Vakuumstempel 7 wird die Appliziereinheit 100 samt Rolleneinheit 61 verfahren, so dass die Rolleneinheit 61 über dem Stanzteil 7 liegt. Anschließend wird die Appliziereinheit 100 mit Rolleneinheit 61 so abgesenkt wird, dass die Rollen 62, 63 jeweils auf dem Außenrand der Kontur des Stanzteils 7 aufliegen. Mittels des Motors M rotiert dann die Rolleneinheit 61 um die eigene Achse, wodurch beide Rollen über den Außenrand der Kontur des Stanzteils 7 fahren.

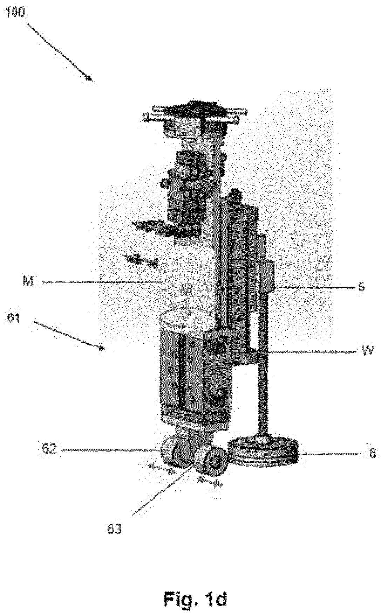

**Figur** 1d stellt eine erfindungsgemäße Applikationseinheit 100 gemäß einer besonders vorteilhaften vierten Ausführungsvariante dar, die im Wesentlichen auf der dritten Ausführungsvariante gemäß Figur 1c basiert. Die Applikationseinheit 100 weist wieder einen Zylinder 5 mit einer Wirkachse (W) auf, an der ein Vakuumstempel 6 vorhanden ist. An der Applikationseinheit 100 ist zusätzlich eine Rolleneinheit 61 als Unterbaugruppe umfassend zwei Rollen 62, 63 vorgesehen. Beide Rollen 62, 63 sind radial bewegbar, so dass je nach Größe des zu verspendenden Stanzteils 7 der von den Rollen 62, 63 zu überwalzende Bereich an den Außenrand der Kontur des Stanzteils 7 angepasst werden kann. Bei größeren Stanzteilen 7 werden hierzu die Rollen 62, 63 zunächst in die gewünschte Position verfahren, bevor die Rollen 62, 63 nach dem Spendevorgang auf das Stanzteil 7 abgesenkt werden.

**Figur** 2 zeigt im Anschnitt einen Vakuumstempel 6. An der Wirkachse (W) ist der Vakuumstempel 6 befestigt. Der Vakuumstempel 6 weist eine kreisrunde Form auf. Die Wirkachse (W) ist als Rohr ausgeführt, um aus dem Vakuumstempel 6 über entsprechende Kanäle 603 Luft absaugen zu können. Der Vakuumstempel 6 ist über das Greifergehäuse 601 kraft- oder formschlüssig an der Wirkachse (W) fixiert. Unterhalb des Greifergehäuses 601 befindet sich eine Dichtung 602, die die Dichtheit des Vakuumstempels 6 sicherstellt. Auf der Dichtung 602 ist ein kreisförmiger Schaumhalter 604 vorgesehen, der zur Fixierung einer ringförmigen Schaumschicht 605 dient. Über die ringförmige Schaumschicht 605 wird ein Vakuum (V) erzeigt, indem die Luft über die Kanäle 603 abgesaugt wird. Im Zentrum der ringförmigen Schaumschicht 606 ist Hohlraum (VK) vorhanden, in dem kein Vakuum vorliegt. Alle einzelnen Bestandteile 602, 603, 605, 606 sind alle kreisförmig und sind kongruent zueinander angeordnet.

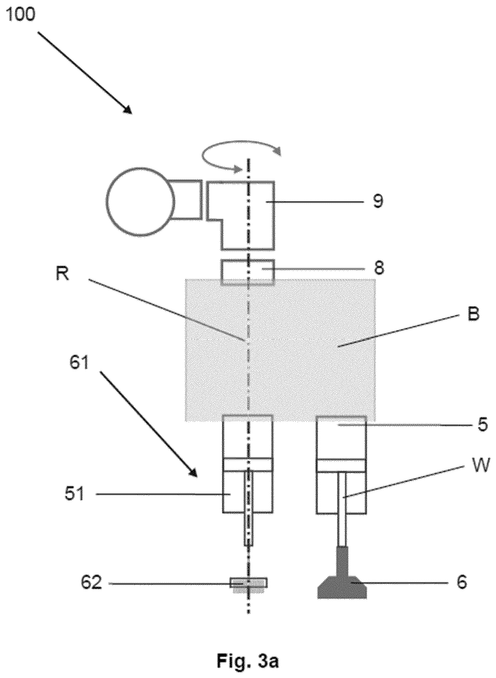

**Figur 3a** zeigt die erfindungsgemäße Applikationseinheit 100 gemäß Figur 1a leicht abgeändert in einer schematischen Darstellung. Die Applikationseinheit 100 ist über einen Roboterflansch 8 mit einem nur angedeutet dargestellten Roboterarm 9 verbunden. Der Zylinder 5 mit der Wirkachse (W) ist über eine entsprechende, hier nicht detailliert dargestellte Vorrichtung B mit dem Roboterflansch 8 verbunden. Der Zylinder 5 ist über die Wirkachse (W) mit dem Vakuumstempel 6 verknüpft. Der Vakuumstempel 6 ist über den Zylinder 5 in der Höhe verfahrbar. An die Appliziereinheit 100 ist zusätzlich über eine entsprechende, hier nicht detailliert dargestellte Vorrichtung B eine Rolleneinheit 61 umfassend eine Rolle 62 angebaut. Die Rolle 62 ist gesteuert über den Zylinder 51 in der Höhe verfahrbar, und zwar unabhängig vom Vakuumstempel 6, so dass die Rolle 62 in die Anpressposition verfahren werden kann. Die Appliziereinheit 100 samt Rolleneinheit 61 und Vakuumstempel 6 kann um die dargestellte Achse R rotieren. Die Breite der Rolle 62 ist etwas größer als der Durchmesser des zu verspendenden Stanzteils 7, so dass die Rolle 62 bei der Rotation der Appliziereinheit 100 über den Außenrand der Kontur des Stanzteils 7 walzt und somit das Stanzteil 7 fest anpresst.

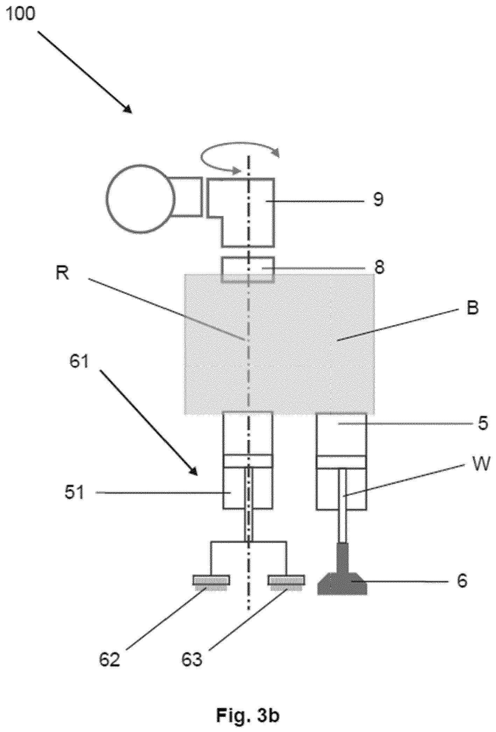

**Figur 3b** zeigt die erfindungsgemäße Applikationseinheit 100 gemäß Figur 1b leicht abgeändert in einer schematischen Darstellung. Die Applikationseinheit 100 ist über den Roboterflansch 8 mit dem nur angedeutet dargestellten Roboterarm 9 verbunden. Der Zylinder 5 mit der Wirkachse (W) ist über eine entsprechende, hier nicht detailliert dargestellte Vorrichtung B mit dem Roboterflansch 8 verbunden. Der Zylinder 5 ist über die Wirkachse (W) mit dem Vakuumstempel 6 verknüpft. Der Vakuumstempel 6 ist über den Zylinder 5 in der Höhe verfahrbar. An die Appliziereinheit 100 ist zusätzlich über eine entsprechende, hier nicht detailliert dargestellte Vorrichtung B eine Rolleneinheit 61 umfassend zwei Rollen 62, 63 angebaut. Die Rollen 62, 63 sind gesteuert über den Zylinder 51 in der Höhe verfahrbar, und zwar unabhängig vom Vakuumstempel 6, so dass die Rollen 62, 63 in die Anpressposition verfahren werden können. Die Appliziereinheit 100 samt Rolleneinheit 61 und Vakuumstempel 6 kann um die dargestellte Achse R rotieren. Die Breite der Rollen 62, 63 ist so gewählt, dass die Rollen 62, 63 bei der Rotation der Appliziereinheit 100 über den Außenrand der Kontur des Stanzteils 7 walzen und somit das Stanzteil 7 fest anpressen.

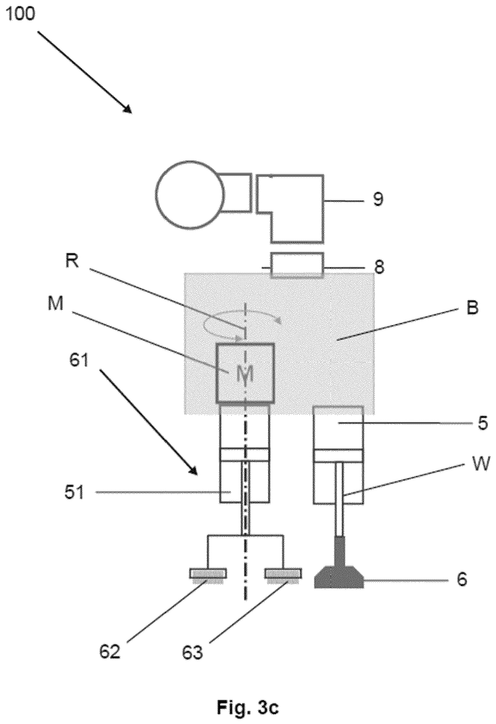

**Figur 3c** zeigt die erfindungsgemäße Applikationseinheit 100 gemäß Figur 1c leicht abgeändert in einer schematischen Darstellung. Die Applikationseinheit 100 entspricht weitgehend der Applikationseinheit 100 gemäß Figur 3b. Gemäß dieser Variante rotiert nicht die Appliziereinheit 100 samt Rolleneinheit 61 und Vakuumstempel 6, sondern es ist ein zusätzlicher Motor M vorgesehen, der die baulich getrennte Rolleneinheit 61 um die Achse R rotieren kann.

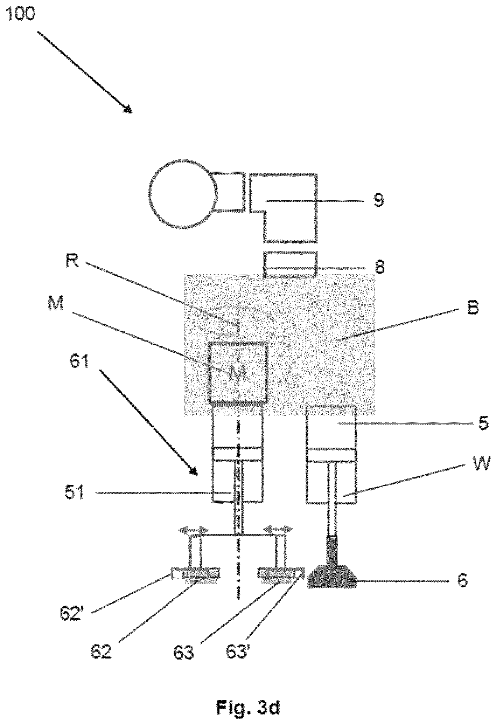

**Figur 3d** zeigt die erfindungsgemäße Applikationseinheit 100 gemäß Figur 1d leicht abgeändert in einer schematischen Darstellung. Die Applikationseinheit 100 entspricht weitgehend der Applikationseinheit 100 gemäß Figur 3c. Gemäß dieser Variante rotiert nicht die Appliziereinheit 100 samt Rolleneinheit 61 und Vakuumstempel 6, sondern es ist ein zusätzlicher Motor M vorgesehen, der die baulich getrennte Rolleneinheit 61 um die Achse R rotieren kann. Beide Rollen 62, 63 sind radial bewegbar, so dass je nach Größe des zu verspendenden Stanzteils 7 der von den Rollen 62, 63 zu überwalzende Bereich an den Außenrand der Kontur des Stanzteils 7 angepasst werden kann. Bei größeren Stanzteilen 7 werden hierzu die Rollen 62, 63 zunächst in die gewünschte Position 62', 63' verfahren, bevor die Rollen 62, 63 nach dem Spendevorgang auf das Stanzteil 7 abgesenkt werden

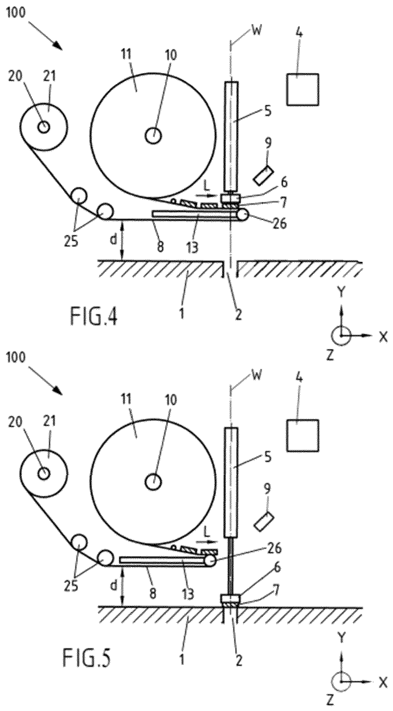

Die **Figuren 4 bis 7b** stellen eine Applikationseinheit 100 gemäß des alternativen Stempelverfahrens dar. Es ist gezeigt, wie der Stempelvorgang des Stanzteils 7 erfolgt, wenn nicht das Pick-and-Place-Verfahren zur Anwendung kommt. Nicht dargestellt ist, wie das Stanzteil nach dem Stempeln mittels der Rolleneinheit 61 angepresst wird. Dennoch zeigen diese Figuren 4 bis 9 sehr anschaulich wie das ausführlich beschriebene alternative Spendeverfahren abläuft. Nach Abschluss des Spendeverfahrens, also wenn das Stanzteil 7 auf dem Fahrzeugelement 1 aufgebracht ist, folgt das das Anpressen mit einer Rolleneinheit 61, die in der dort gezeigten Appliziereinheit integriert ist. Diese Rolleneinheit ist in den vorherigen Figuren ausführlich beschrieben.

Gemäß **Figur** 4 ist die Materialspulenaufnahme 10 mit einer Materialspule 11 bestückt. Auf der Materialspule 11 ist ein Stanzteilband 8 mit einer Vielzahl von selbstklebenden Stanzteilen 7 aufgewickelt. Das Stanzteilband 8 wurde beim Einlegen entlang seiner Längsachse (L) über die Umlenkeinheit 13 geführt und an der Vorderkante der Umlenkeinheit um diese herumgeführt. Auf der Stanzteilbandspule 21, welche in der Stanzteilbandspulenaufnahme 20 aufgenommen ist, kann das Stanzteilband 8 aufgewickelt werden. Dafür wird das Stanzteilband beispielsweise auf der Unterseite der Umlenkeinheit in Richtung der Stanzteilbandspule 21 geführt. Verschiedene Umlenkrollen 25 können dabei vorgesehen sein, um den Verlauf des Stanzteilbandes anwendungsspezifisch zu beeinflussen und anzupassen. Die Umlenkeinheit 13 kann an der Umlenkkante selbst eine Umlenkrolle 26 aufweisen. Zwischen der Unterseite der Umlenkeinheit 13 und der Oberfläche des Fahrzeugelements 1 besteht der Abstand d. In dem Fahrzeugelement 1 befindet sich auch die durch das selbstklebende Stanzteil 7 zu verschließende Öffnung 2. Zudem weist die erfindungsgemäße Applikationseinheit 100 einen Zylinder 5 auf. Am Ende der Kolbenstange des Zylinders 5 ist ein Vakuumstempel 6 befestigt, wie er in der Figur 1 gezeigt und prinzipiell in der Figur 2 dargestellt ist und der beispielsweise durch Pneumatikschläuche mit Vakuum versorgt wird. In der Figur 5 befinden sich die Umlenkeinheit 13 und der Vakuumstempel 6 in einer Übernahmeposition in der das selbstklebende Stanzteil 7 durch die Umlenkeinheit 13 unterhalb des Vakuumstempels 6 bereitgestellt wird. Eine Steuerung 4 ermittelt mit einem Sensor 9, ob sich das selbstklebende Stanzteil 7 auf der Umlenkeinheit 13 befindet und ob es sich in der Übernahmeposition befindet. Die Steuerungseinheit 4 ist darüber hinaus mit der der Umlenkeinheit 13, dem Zylinder 5 und einem Aktor (nicht dargestellt) verbunden Stanzteilbandspulenaufnahme 20 über geeignete, um diese steuern zu können.

Die Applikationseinheit 100 wird mit einer Materialspule 11 bestückt, indem die Materialspule in die dafür vorgesehen Materialspulenaufnahmegesetzt 10 wird. Das darauf aufgewickelte Stanzteilband 8 enthält selbstklebende Stanzteile 7, die eine Öffnung 2 in einer Fahrzeugelement 1 verschließen sollen. Die selbstklebenden Stanzteile sind beabstandet auf dem Stanzteilband 8 aufgesetzt und lassen sich leicht von diesem ablösen. Das Stanzteilband 8 wird durch die Umlenkeinheit 13 geführt und wird durch diese umgelenkt. Soll eine Öffnung 2 in einem Fahrzeugelement 1 verschlossen werden, so wird die Stanzteilbandspule 21 solange in Rotation versetzt und damit aufgewickelt, bis ein Sensor 9 erkennt, dass ein selbstklebendes Stanzteil 7 auf der Umlenkeinheit 13 unterhalb des Vakuumstempels 6, in Übernahmeposition befindet.

In einem nächsten Schritt wird durch die Steuereinheit 4 in den Vakuumstempel 6 ein Vakuum aktiviert. Dadurch entsteht an der Unterseite, die dem selbstklebenden Stanzteil 7 zugewandt ist, ein Unterdruck. Vorzugsweise wird in einem nächsten Schritt der Zylinder 5 um eine geringe Weglänge ausgefahren, sodass sichergestellt ist, dass das selbstklebende Stanzteil 7 durch den Vakuumstempel 6 fixiert ist. Der Zylinder 5 wird durch die Steuerungseinheit 4 wieder in die Übernahmeposition bewegt, wodurch das selbstklebende Stanzteil 7 von dem Stanzteilband 8 abgelöst wird.

In einem weiteren Schritt wird die Umlenkeinheit 13 in die Applikationsposition bewegt. Die Umlenkeinheit 13 wird dazu soweit entgegen der Längsrichtung (L) des Stanzteilbandes bewegt, sodass die Wirkachse (W) des Zylinders 5 freigegeben wird. Die Umlenkeinheit 13 sollte dazu mindesten um die Länge des Stanzteils 7 bewegt werden, wobei die Länge durch die Länge des Stanzteils 7 in Längsrichtung (L) des Stanzteilbandes 8 bestimmt ist.

**Figur** 5 stellt die Applikationseinheit 100 in der Applikationsposition dar. Sobald die Wirkachse (W) des Zylinders 5 freigegeben ist, kann das selbstklebende Stanzteil 7 ohne die Umlenkeinheit 13 oder das Stanzteilband 8 zu berühren auf das Fahrzeugelement 1 aufgebracht werden. Das Aufbringen erfolgt dadurch, dass der Zylinder 5 aus der Übernahmeposition in die Applikationsposition bewegt wird. Die Steuereinheit 4 gibt dazu die entsprechenden Signale an die Umlenkeinheit 13 und den Zylinder 5. Der Zylinder 5 presst dann den Vakuumstempel 6 samt des fixierten selbstklebenden Stanzteils 7 auf das Fahrzeugelement 1 und verschließt beispielsweise eine zu verschließende Öffnung 2. Durch die Anpresskraft, die der Zylinder 5 über den Vakuumstempel 6 auf das selbstklebende Stanzteil 7 ausübt, wird das selbstklebende Stanzteil fest auf dem Fahrzeugelement 1 verklebt. Sobald das Stanzteil 7 aufgebracht ist, kann das Vakuum in dem Vakuumstempel 6 deaktiviert werden.

Über die Steuereinheit 4 werden anschließend weitere entsprechende Signale an den Zylinder 5 gesendet. Der Zylinder 5 hebt den Vakuumstempel 6 leicht an, so dass sich Spalt zwischen Oberfläche des Fahrzeugelements 1 und Unterseite des Vakuumstempels 6 ergibt.

Anschließend würde jetzt die Rolleneinheit 61 in Funktion treten und das Stanzteil über die Rollen 62, 63 auf das Fahrzeugelement 1 aufpressen.

Um ein weiteres Stanzteil 7 auf einem Fahrzeugelement 1 aufzustempeln, wird der Vakuumstempel 6 durch den Zylinder 5 wieder in die Übernahmeposition gebracht. Dazu wird die Umlenkeinheit 13 wieder um mindesten die Länge des Stanzteils 7 zurückbewegt, so dass ein weiteres selbstklebendes Stanzteil 7 vor dem Vakuumstempel 6 positioniert wird. Ein Vorschub des Stanzteilbandes 8 kann durch die eine Antriebseinheit in der Stanzteilbandspulenaufnahme 20 erfolgen. Dazu wird nach dem Ablösen eines selbstklebenden Stanzteils 7 durch die Steuereinheit 4 ein pneumatischer oder elektrischer Aktor aktiviert, der die Stanzteilbandspulenaufnahme 20 in Rotation versetzt, um das Stanzteilband 8 aufzuwickeln. In gleichem Maße wie das Stanzteilband 8 auf die Stanzteilbandspule 21 aufgewickelt wird, wird dieses von der Materialspule 11 abgewickelt. Durch den Sensor 9 kann die Steuereinheit dann die Position ermitteln, in der ein selbstklebendes Stanzteil 7 korrekt auf der Umlenkeinheit 13 positioniert ist, um durch den Vakuumstempel 6 abgelöst zu werden. Alternativ ist es möglich, dass das Stanzteilband 8 beim Bewegen der Umlenkeinheit 13 von der Übernahmeposition in die Applikationsposition durch Aufwickeln auf die Stanzteilbandspule 21 aufgewickelt wird. Während der gegenläufigen Bewegung, also aus Applikationsposition in die Übernahmeposition, kann dann die Stanzteilbandspule 21 blockiert werden und durch die Bewegung der Umlenkeinheit 13 Stanzteilband 8 mit darauf befindlichen selbstklebenden Stanzteilen 7 von der Materialspule 11 abgewickelt werden.

Die Steuerungseinheit 4 kann so ausgeführt sein, dass sie in Reaktion auf ein von einer externen Quelle, zum Beispiel einem Fertigungsroboter oder einer Fertigungsstraße, empfangenes Signal, zum Beispiel ein Triggersignal, das erfindungsgemäße Verfahren einmalig durchführt. Alternativ können zwei solcher Signale vorgesehen sein, wovon in Reaktion auf ein erstes Triggersignal (Übernahmesignal) die Umlenkeinheit 13 und der Vakuumstempel 6 in die Übernahmeposition bewegt werden und das selbstklebende Stanzteil 7 an dem Vakuumstempel 6 durch das Vakuum fixiert wird. Durch ein zweites Triggersignal (Applikationssignal) werden die Umlenkeinheit 13 und der Vakuumstempel 6 in die Applikationsposition bewegt. Das erste und das zweite Triggersignal können dann wiederholt erfolgen, um so eine Vielzahl von selbstklebenden Stanzteilen 7 aufzustempeln. Vorzugsweise bewegt sich der Roboterarm, nach einem zweiten und vor einem ersten Triggersignal, so dass die Applikationseinheit 100 sich über der nächsten zu Position befindet, an der das nächste selbstklebende Stanzteil 7 aufgestempelt werden soll. Dadurch kann zusätzlich Zeit eingespart werden, da die Bewegung der Applikationseinheit und die Bewegung in die Übernahmeposition zeitgleich erfolgen können.

Die Distanz d zwischen dem Fahrzeugelement 1 und der Applikationseinheit 100 beträgt ca. 100 mm, und ist üblicherweise zwischen 50 mm und 300 mm. Mit dem erfindungsgemäßen Verfahren können selbstklebende Stanzteile 7 in weniger als 1,5 s aufgestempelt werden.

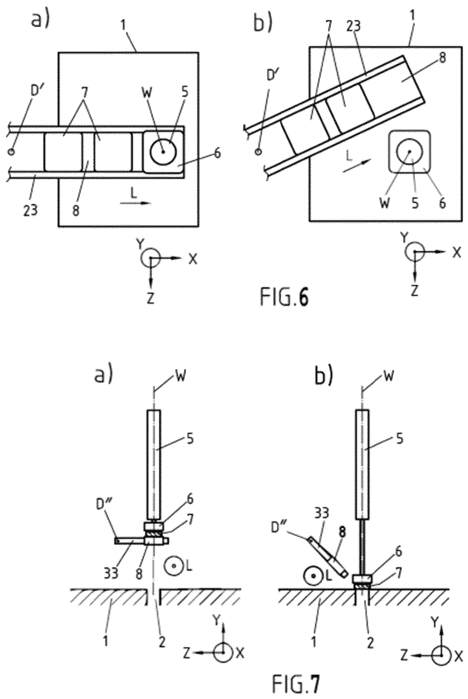

Die **Figuren 6a)** und **6b****)** zeigen eine Variante des Verfahrens. Dargestellt ist ein Ausschnitt der Applikationseinheit in einer Draufsicht. Gemäß dieser zweiten Ausführungsvariante wird die Umlenkeinheit 23 von der Übernahmeposition in die Applikationsposition gebracht, indem diese um eine Drehachse D' bewegt, bzw. geschwenkt, wird. Die Drehachse D' liegt dabei parallel zur Wirkachse (W) des Zylinders 5. Die Umlenkeinheit 23 kann beispielsweise durch einen pneumatischen oder elektromechanischen Aktor, der exzentrisch an der Umlenkeinheit 23 angebracht ist, bewegt werden.

Die **Figuren 7a)** und **7b****)** zeigen eine weitere Variante des Verfahrens. Dargestellt ist wiederum ein Ausschnitt der Applikationseinheit in einer Seitenansicht. Gemäß dieser dritten Ausführungsvariante wird die Umlenkeinheit 33 von der Übernahmeposition in die Applikationsposition gebracht, indem diese um eine Drehachse D" bewegt, bzw. gekippt, wird. Die Drehachse D" liegt dabei in einer Ebene senkrecht zur Wirkachse (W) des Zylinders 5. Die Umlenkeinheit 33 kann beispielsweise durch einen pneumatischen oder elektromechanischen Aktor, der exzentrisch an der Umlenkeinheit 33 angebracht ist, bewegt werden.

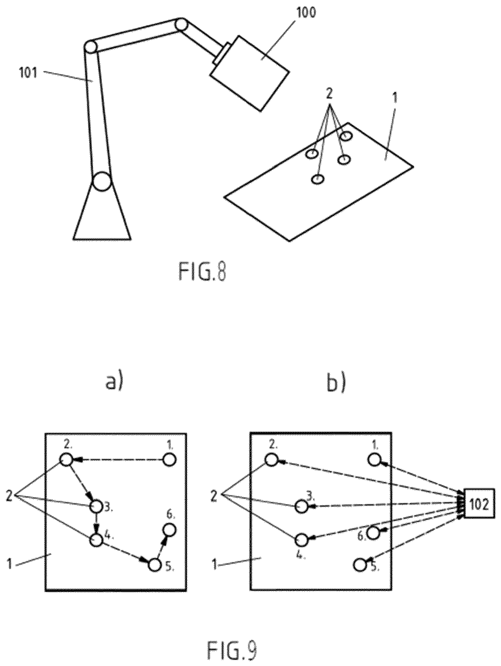

Die **Figur 8** ist eine schematische Darstellung einer Fertigungsstation, beispielsweise einer Automobilfertigung. An einem Mehrachsen-Roboter 101 ist als Effektor die Applikationseinheit 100 angebracht. Bei dem Mehrachsen-Roboter kann es sich auch um einen SCARA-Roboter handeln. Die Applikationseinheit 100 kann mittels Schnellkupplungen mit einem Vakuumgenerator (nicht dargestellt) verbunden werden und mittels elektrischen Verbindern mit Energie und Signalen, zum Beispiel die vorgenannten Triggersignale, versorgt werden. Durch den Roboter kann die Applikationseinheit an verschiedene Orte bewegt werden, um dann ein selbstklebendes Stanzteil aufzustempeln.

Die **Figur 9** stellt exemplarisch die Wegfolge der Positionen eines Roboterarms bei der Applikation von selbstklebende Stanzteilen dar. Dabei zeigt die Figur 9a) eine Wegfolge gemäß dem alternativen Verfahren. Die Figur 9b) stellt für die gleiche Anordnungen von Öffnungen 2 in einem Fahrzeugelement 1 eine Wegfolge nach dem Pick-and-place-Verfahren dar. Während mit der einen Applikationseinheit die Öffnungen nacheinander auf kürzestem Wege durch den Roboter angefahren werden können, ist es bei einem nach dem Pick-and-place arbeitenden Applikator erforderlich, ein Vielfaches des Weges zurückzulegen. Der Grund hierfür liegt darin, dass nach jedem Applizieren eines Stanzteils eine Spendeposition 102 anzufahren um ein weiteres selbstklebendes Stanzteil aufzunehmen. Somit sind für jede Applikation ein Hin- und ein Rückweg erforderlich, was einen größeren Zeitaufwand zur Folge hat.

### Bezugszeichenliste

- 1: Fahrzeugelement
- 2: Abzudeckende Öffnung
- 4: Steuereinheit
- 5, 51: Zylinder
- 6: Vakuumstempel
- 7: Selbstklebendes Stanzteil
- 8: Stanzteilband
- 9: Sensor
- 10: Materialspulenaufnahme
- 11: Materialspule
- 13: Umlenkeinheit
- 20: Stanzteilbandspulenaufnahme
- 21: Stanzteilbandspule
- 23: Umlenkeinheit
- 25: Umlenkrollen
- 26: Umlenkrolle
- 33: Umlenkeinheit
- 61: Rolleneinheit
- 62, 63: Rollen
- 62', 63': Rollen in zweiter Position
- 100: Applikationseinheit
- 101: Roboterarm
- 102: Spendeposition
- 601: Greifergehäuse
- 602: Dichtung
- 603: Kanäle
- 604: Schaumhalter
- 605: ringförmige Schaumschicht
- W: Wirkachse
- R: Achse
- M: Motor
- B: Vorrichtung
- V: Vakuum
- VF: Hohlraum

## Patentansprüche

1. Verfahren zum automatisierten Aufbringen eines selbstklebenden Stanzteils (7) auf ein Fahrzeugelement (1) wie Batteriegehäuse durch eine an einem Roboterarm befestigte Applikationseinheit (100), wobei mittels eines Zylinders (5), aufweisend eine Wirkachse (W) und umfassend einen Vakuumstempel (6), ein selbstklebendes Stanzteil (7) von einem Stanzteilband (8) aufweisend eine Längsrichtung (L) abgelöst wird und dann auf ein Fahrzeugelement (1) aufgestempelt wird,
- wobei das Stanzteilband (8) zur Verfügung gestellt wird,
- der Vakuumstempel (6) in eine Übernahmeposition bewegt wird,
- wobei in der Übernahmeposition ein Vakuum in dem Vakuumstempel (6) aktiviert wird,
- das selbstklebende Stanzteil (7) durch Bewegen des Vakuumstempels in Richtung des selbstklebenden Stanzteils (7) mittels des Vakuums am Vakuumstempel (6) fixiert wird,
- das selbstklebende Stanzteil (7) von dem Stanzteilband (8) abgelöst wird, indem der Vakuumstempel (6) mindestens so weit wegbewegt wird, dass das selbstklebende Stanzteil (7) vollständig von dem Stanzteilband (8) abgelöst wird, und
- der Vakuumstempel (6) in eine Position über das Fahrzeugelement (1) geführt wird und das selbstklebende Stanzteil (7) auf dem Fahrzeugelement (1) aufgebracht wird, indem der Vakuumstempel (6) durch den Zylinder (5) aus der Übernahmeposition entlang der Wirkachse (W) in eine Applikationsposition gebracht wird, in der das selbstklebende Stanzteil (7) auf das Fahrzeugelement (1) gestempelt wird,
- der Vakuumstempel (6) nach dem Stempeln wegbewegt wird,
wobei eine separate Rolleneinheit (61) umfassend mindestens eine Rolle (62, 63) vorgesehen ist, die nach dem Stempeln zum Stanzteil geführt und so bewegt wird, dass die mindestens eine Rolle (62, 63) den Außenrand der Kontur des Stanzteils (7) abfährt und das Stanzteil so auf das Fahrzeugelement (1) anpresst.

2. Verfahren nach Anspruch 1,
**dadurch gekennzeichnet, dass**
- das Stanzteilband (8) über eine Umlenkeinheit (13, 23, 33) geführt wird und
- das Stanzteilband (8) durch die Umlenkeinheit (13, 23, 33) in eine Übernahmeposition vor den Vakuumstempel (6) bewegt wird,
- wobei in der Übernahmeposition ein Vakuum in dem Vakuumstempel (6) aktiviert wird,
- das selbstklebende Stanzteil (7) durch Bewegen des Vakuumstempels in Richtung des selbstklebenden Stanzteils (7) mittels des Vakuums am Vakuumstempel (6) fixiert wird,
- das selbstklebende Stanzteil (7) von dem Stanzteilband (8) abgelöst wird, indem die Umlenkeinheit (13, 23, 33) mindestens so weit von der Wirkachse (W) des Zylinders (5) wegbewegt wird, dass das selbstklebende Stanzteil (7) vollständig von dem Stanzteilband (8) abgelöst wird,
- das selbstklebende Stanzteil (7) auf dem Fahrzeugelement (1) aufgebracht wird, indem der Vakuumstempel (6) durch den Zylinder (5) aus der Übernahmeposition entlang der Wirkachse (W) in eine Applikationsposition gebracht wird, in der das selbstklebende Stanzteil (7) auf das Fahrzeugelement (1) gestempelt wird.

3. Verfahren nach Anspruch 2, **dadurch gekennzeichnet**, indem die Umlenkeinheit (13, 23, 33) auf einer Geraden parallel zur Richtung der Längsrichtung (L) des Stanzteilbandes aus der Übernahmeposition in die Applikationsposition bewegt wird.

4. Verfahren nach einem der vorhergehenden Ansprüche 2 bis 3, **dadurch gekennzeichnet**, indem die Umlenkeinheit (13, 23, 33) auf einer Kreisbahn aus der Übernahmeposition in die Applikationsposition bewegt wird, wobei die Drehachse (D) der Kreisbahn parallel oder senkrecht zu der Wirkachse (W) des Zylinders (5) angeordnet ist.

5. Verfahren nach einem der vorhergehenden Ansprüche 2 bis 4, **dadurch gekennzeichnet, dass** zumindest in der Übernahmeposition das Stanzteilband (8) rückseitig auf der Umlenkeinheit (13, 23, 33) fixiert wird, indem ein in der Umlenkeinheit ausgebildetes Vakuum das Stanzteilband rückseitig ansaugt.

6. Verfahren nach einem der vorhergehenden Ansprüche 2 bis 5, **dadurch gekennzeichnet, dass** in weiteren Schritten
- der Zylinder (5) den Vakuumstempel (6) aus der Applikationsposition entlang der Wirkachse (W) in die Übernahmeposition bewegt wird, und dann
- die Umlenkeinheit (13, 23, 33) aus der Applikationsposition in die Übernahmeposition bewegt wird, und
- die vorangegangen Schritte mindestens ein weiteres Mal wiederholt werden, um mindestens ein weiteres selbstklebendes Stanzteil (7) auf das Fahrzeugelement (1) aufzustempeln.

7. Verfahren nach einem der vorhergehenden Ansprüche, **dadurch gekennzeichnet, dass** das selbstklebende Stanzteil (7) in der Übernahmeposition bereits teilweise von dem Stanzteilband (8) abgelöst ist.

8. Verfahren nach einem der vorhergehenden Ansprüche, **dadurch gekennzeichnet, dass** das Vakuum im Vakuumstempel (7) vor Erreichen der Übernahmeposition und nach Erreichen der Applikationsposition deaktiviert wird.

9. Applikationseinheit (100) für selbstklebende Stanzteile (7), umfassend
- einen Zylinder (5), aufweisend eine Wirkachse (W) und umfassend einen Vakuumstempel (6),
- der Vakuumstempel (6) ein Vakuum bereitstellen kann,
- der Zylinder (5) dazu ausgebildet ist, den Vakuumstempel (6) in eine Übernahmeposition zu bewegen, in der der Vakuumstempel (6) das selbstklebende Stanzteil (7) fixiert, und
- den Vakuumstempel (6) in eine Applikationsposition zu bewegen, in der das selbstklebende Stanzteil (7) auf dem Fahrzeugelement (1) aufgestempelt wird,
- der Vakuumstempel (6) nach dem Stempeln wegbewegt wird,
**dadurch gekennzeichnet, dass**
eine separate Rolleneinheit (61) umfassend mindestens eine Rolle (62, 63) vorgesehen ist, die nach dem Stempeln zum Stanzteil geführt und so bewegt wird, dass die mindestens eine Rolle (62, 63) den Außenrand der Kontur des Stanzteils (7) abfährt und das Stanzteil so auf das Fahrzeugelement (1) anpresst.

10. Applikationseinheit (100) nach Anspruch 9, zusätzlich umfassend
- eine Umlenkeinheit (13, 23, 33), die dazu ausgebildet ist, das Stanzteilband (8) zu führen, und ausgebbildet ist
- eine Übernahmeposition einzunehmen, in der die Umlenkeinheit (13, 23, 33) so konfiguriert ist, dass ein selbstklebendes Stanzteil (7) vor dem Vakuumstempel (6) positioniert ist, oder
- eine Applikationsposition einzunehmen, in der die Umlenkeinheit (13, 23, 33) so konfiguriert ist, dass sie außerhalb der Wirkachse (W) des Zylinders (5) positioniert ist,
- und der Zylinder (5) dazu ausgebildet ist,
- den Vakuumstempel (6) in eine Übernahmeposition zu bewegen, in der der Vakuumstempel (6) das selbstklebende Stanzteil (7) fixiert, und
- den Vakuumstempel (6) in eine Applikationsposition zu bewegen, in der das selbstklebende Stanzteil (7) auf dem Fahrzeugelement (1) aufgestempelt wird,
wobei
die Umlenkeinheit (13, 23, 33) konfiguriert ist, um durch die Bewegung der Umlenkeinheit (13, 23, 33) aus der Übernahmeposition in die Applikationsposition, ein selbstklebendes Stanzteil (7) vollständig von dem Stanzteilband (8) abzulösen, und
der Zylinder (8) konfiguriert ist, um durch die Bewegung der Umlenkeinheit (13, 23, 33) aus der Übernahmeposition in die Applikationsposition, ein selbstklebendes Stanzteil (7) auf das Fahrzeugelement (1) aufzustempeln.

11. Applikationseinheit (100) nach Anspruch 9 oder 10, **dadurch gekennzeichnet, dass** mittels eines Motors M die Rolleneinheit (61) unabhängig von der sonstigen Appliziereinheit (100) um die eigene Achse rotieren kann.

12. Applikationseinheit (100) nach einem der vorhergehenden Ansprüche 9 bis 11, **dadurch gekennzeichnet, dass** die Rolleneinheit (61) umfassend mindestens eine Rolle (62, 63) und/oder die Rollen (62, 63) vertikal zum Fahrzeugelement (1) vorfahrbar sind.

13. Applikationseinheit (100) nach einem der vorhergehenden Ansprüche 9 bis 12, **dadurch gekennzeichnet, dass**
die mindestens eine Rolle (62, 63) der Rolleneinheit (61) in eine Richtung von der Zentralachse nach außen weisend verstellbar ist, insbesondere in radialer Richtung.

14. Applikationseinheit (100) nach einem der vorhergehenden Ansprüche 9 bis 13, **dadurch gekennzeichnet, dass**
die Rolleneinheit (61) umfassend mindestens eine Rolle (62, 63) und/oder die mindestens eine Rolle (62, 63) der Rolleneinheit (61) mittels eines oder mehrerer Zylinders (51) in der Höhe verstellt werden können.

15. Applikationseinheit (100) nach einem der Ansprüche 9 bis 14, **dadurch gekennzeichnet, dass**
der Vakuumstempel (6) eine an die Geometrie des selbstklebenden Stanzteils (7) angepasste Geometrie aufweist und/oder dass der Vakuumstempel (6) einen elastischen Gummistempel oder einen elastischen Schaum umfasst.

16. Applikationseinheit (100) nach einem der Ansprüche 9 bis 15, **dadurch gekennzeichnet dass**
die Applikationseinheit (100) als wechselbarer Effektor für einen Roboterarm ausgeführt ist, insbesondere, dass die Applikationseinheit (100) mindestens einen Schnellverschluss aufweist, über den zumindest elektrische Verbindungen und/oder Vakuumleitungen verbunden werden.
